# EUROPEAN PATENT SPECIFICATION

(11) **EP 2 372 310 B1**
(45) Date of publication and mention of the grant of the patent: **25.03.2015**
(21) Application number: 11153875.7
(22) Date of filing: 09.02.2011
(51) Int. Cl.: G01S 5/16, G06K 9/00, G06K 9/62, G01C 21/36, G01C 21/26, G01S 19/48, G06T 7/00

(54) **Image processing system and position measurement system**
Bildverarbeitungssystem und Positionsmessungssystem
Système de traitement d'images et système de mesure de la position

(30) Priority: 31.03.2010 JP 2010084626; 04.08.2010 JP 2010175644
(43) Date of publication of application: 05.10.2011
(73) Proprietor: AISIN AW CO., LTD., Anjo-shi, Aichi 444-1192 (JP)
(72) Inventor: Miyajima, Takayuki, Anjo-shi Aichi 444-1192 (JP)
(74) Representative: Kramer Barske Schmidtchen Patentanwälte PartG mbB

(56) References cited:
- WO-A1-2009/007904
- US-A1- 2003 074 130
- US-A1- 2008 240 505
- US-A1- 2008 240 513
- US-A1- 2008 240 573

## Description

The invention relates to an image processing system, and more particularly to an image processing system that creates reference data used for scenic image recognition processing, and a position measurement system that uses the reference data.

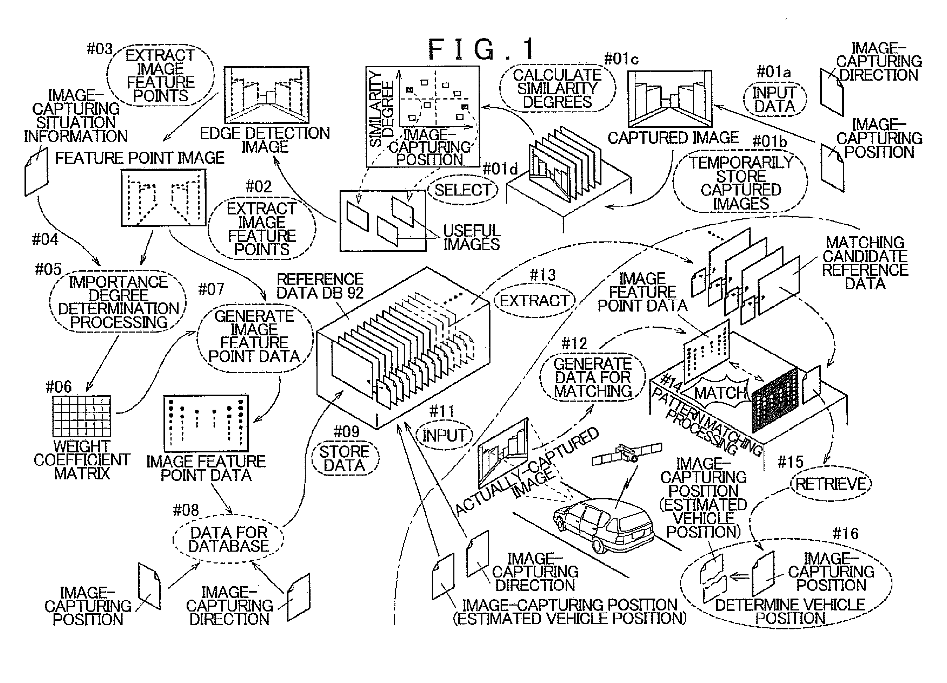

In car navigation apparatuses, a method in which information obtained from sensors such as a gyro sensor and a geomagnetic sensor is used (an autonomous navigation method), a method in which signals from GPS satellites are used, or the combination of the autonomous navigation method and the method in which signals from GPS satellites are used has been employed as a method of calculating the current position of a vehicle. For example, US2008024573 describes a navigation system that takes pictures of the surroundings of the vehicle then recognizes, matches, and learns relevant image features, in order to improve the accuracy of the GPS position estimate. Further, for example, a position measurement apparatus described in Japanese Patent Application Publication No. 2007-108043 (JP-A-2007-108043) is known as a position measurement apparatus configured to accurately calculate the current position (refer to the paragraphs 0009 to 0013, and FIG. 1). In the position measurement apparatus, first, a tentative current position is obtained using the signals from navigation satellites, and the like. Then, the coordinates of a feature point (a vehicle coordinate system feature point) of a road marking in a coordinate system (a vehicle coordinate system) with respect to the tentative current position are calculated using the captured image of a scene ahead of the vehicle. Then, the current position of the vehicle is calculated using the calculated vehicle coordinate system feature point and the stored coordinates of the feature point of the road marking (i.e., the coordinates shown in the world coordinate system). In the position measurement apparatus, it is possible to accurately calculate the current position, even when the position measured using the signals transmitted from the navigation satellites and/or signals transmitted from various sensors includes an error.

In the position measurement apparatus described in Japanese Patent Application Publication No. 2007-108043 (JP-A-2007-108043), the space coordinates of the feature point of the road marking on a road are obtained using a stereo image, and the latitude and the longitude of the road marking having the feature point are obtained from the database of road marking information. Thus, the current position of the vehicle is calculated using the coordinates obtained using the latitude and the longitude of the road marking. Therefore, the position measurement apparatus cannot be used in an area where there is no road marking. Also, because it is necessary to compute the space coordinates of the feature point recognized through image processing, the apparatus is required to have high computing ability, which results in an increase in cost.

Accordingly, it is conceivable to employ a position calculation method in which a scenic image recognition technology is used, as a position calculation method that can be used in a road and a specific site where there is no road marking, and that does not require the calculation of the space coordinates of each feature point. In this case, it is important to create image data for reference (reference data), which is used in the scenic image recognition technology. Therefore, it is desired to implement an image processing system suitable for creating the reference data useful for the scenic image recognition, and a position measurement system that uses such reference data.

A first aspect of the invention relates to an image processing system as defined by appended claim 1.

In the image processing system according to the above-described first aspect, the similarity degrees of the plurality of the captured images obtained in the predetermined region are calculated, and the processing target captured images whose similarity degrees are different from each other are selected as the useful images. Thus, a set of the reference data, which is a set of the image feature point data for scenic image recognition, is generated based on the useful images, and the set of the reference data, whose image-capturing positions are close to each other in the predetermined region, are not similar to each other. Therefore, it is possible to improve the efficiency of the matching processing that is performed as the scenic image recognition.

A second aspect of the invention relates to an image processing system as defined by appended claim 6.

In the image processing system according to the above-described first aspect, the similarity degrees of the captured images are calculated. When the similarity degrees of the set of the image feature point data generated from the captured images are calculated as in the image processing system according to the above-described second aspect, it is possible to obtain the advantageous effects similar to the advantageous effects obtained in the first aspect.

A third aspect of the invention relates to a position measurement system as defined by claim 18.

In the position measurement system according to the third aspect , the reference data, which is useful for the scene matching, is used as described above, and therefore, it is possible to accurately determine the vehicle position.

The foregoing and further objects, features and advantages of the invention will become apparent from the following description of example embodiments with reference to the accompanying drawings, wherein like numerals are used to represent like elements and wherein:
FIG. 1 is a schematic diagram used for explaining the creation of reference data by an image processing system according to an embodiment of the invention, and the basic concept of a position measurement technology in which a vehicle position is determined through matching processing using the reference data;
FIG. 2 is a functional block diagram showing a former-stage group of main functions in an example of an image processing system according to the embodiment of the invention;
FIG. 3 is a functional block diagram showing a latter-stage group of main functions in the example of the image processing system according to the embodiment of the invention;
FIGS. 4A to 4D are schematic diagrams schematically showing a selection algorithm for selecting useful images, which is employed in an example of the image processing system according to the embodiment of the invention;
FIGS. 5A to 5F are schematic diagrams schematically showing a process during which image feature point data is generated from a captured image while adjusting weight coefficients;

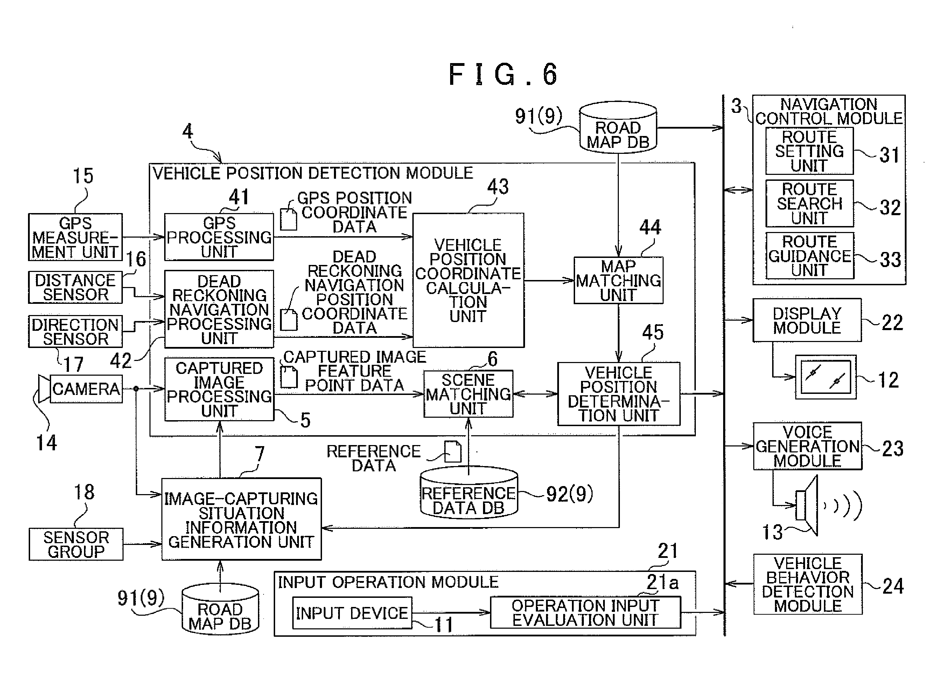

FIG. 6 shows functional blocks of a car navigation system that uses a reference data database created by the image processing system according to the embodiment of the invention.
FIG. 7 is a schematic diagram showing an example of a situation to which the image processing system according to the embodiment of the invention is appropriately applied;
FIG. 8 is a schematic diagram showing another example of the situation to which the image processing system according to the embodiment of the invention is appropriately applied; and
FIG. 9 is a functional block diagram showing main functions of an image processing system according to another embodiment of the invention.

Hereinafter, an embodiment of the invention will be described in detail with reference to the drawings. FIG. 1 schematically shows the basic concept of a position measurement technology in which a scenic image captured by a vehicle-mounted camera (a front camera that captures an image of a scene ahead of the vehicle in a direction in which the vehicle travels in the embodiment) is recognized through matching processing using reference data created by an image processing system according to the embodiment of the invention, so that a position at which the scenic image is captured, that is, the position of a vehicle is determined. The following description will be made on the assumption that the reference data is collected while the vehicle continues to travel along a predetermined route.

First, a procedure for creating a reference data database (hereinafter, simply referred to as "reference data DB") 92 will be described. As shown in FIG. 1, a captured image obtained by capturing an image of a scene viewed from a vehicle during travel, and image-capturing attribute information are input (step 01a). The image-capturing attribute information includes an image-capturing position of the captured image and an image-capturing direction of the captured image at the time of image capturing. The term "an image-capturing position of the captured image" signifies a position at which the image is captured to obtain the captured image. The term "an image-capturing direction of the captured image" signifies a direction in which the image is captured to obtain the captured image. A working memory temporarily stores a plurality of the input captured images whose image-capturing positions are included in a predetermined region (a travel distance region corresponding to a predetermined distance traveled by the vehicle in this example), as processing target captured images (step 01b). In this example, a series of the captured images, which is obtained by continuously capturing images, is the processing target captured images. Similarity degrees of the plurality of captured images that are temporarily stored are calculated, and the similarity degrees are assigned to the respective captured images (step 01c). A predetermined number of the captured images are selected, as useful images, from among the plurality of captured images to which the similarity degrees have been assigned, using the similarity degrees and the image-capturing positions as difference parameters (step Old). The predetermined number of the captured images are selected so that the difference parameters of the selected captured images are dispersed as much as possible. Then, feature point detection processing for detecting image feature points, for example, edge detection processing is performed on the captured images that are selected as the useful images (step 02). A portion, at which edge points corresponding to one or more pixels constitute one line segment, for example, an outline, is referred to as "a line segment edge". An intersection point, at which a plurality of the line segment edges intersect with each other, is referred to as "a comer". The edge points, which constitute the line segment edge, are referred to as "line segment edge points". Among the line segment edge points, the edge point corresponding to the corner is referred to as "a corner edge point". The line segment edge points and the corner edge point are examples of the image feature point. The line segment edge points including the corner edge point are extracted, as the image feature points, from an edge detection image obtained through the edge detection processing (step 03).

In processing different from the processing from step 01 to 03 (i.e., processing executed in parallel with the processing from step O1 to 03), image-capturing situation information is obtained (step 04). The image-capturing situation information indicates the possibility that a specific subject is included in the captured image. As described in detail later, the image-capturing situation information is used for the image feature points distributed in regions of the captured image, in order to make the importance degree of the image feature point in the region where the specific subject is located different from the importance degree of the image feature point in the other region. It is possible to create the reliable reference data DB 92 eventually, by decreasing the importance degree of the image feature point that is not suitable for the scenic image recognition, and/or increasing the importance degree of the image feature point that is important for the scenic image recognition, using the image-capturing situation information. The importance degree of each image feature point is determined based on the image-capturing situation information (step 05). Then, a weight coefficient matrix is generated (step 06). The weight coefficient matrix stipulates the assignment of the weight coefficients to the image feature points in accordance with the importance degrees of the image feature points. The subject to be included in the image-capturing situation information may be detected from the captured image through the image recognition processing, or may be detected by processing sensor signals from various vehicle-mounted sensors (a distance sensor, an obstacle detection sensor, and the like). Alternatively, the subject to be included in the image-capturing situation information may be detected by processing signals from outside, which are obtained from, for example, the Vehicle Information and Communication System (VICS) (Registered Trademark in Japan).

Subsequently, image feature point data is generated for each captured image, by performing processing on the image feature points based on the weight coefficients (step 07). During the process of creating the image feature point data, selection processing is performed. That is, the image feature points with the weight coefficients equal to or lower than a first threshold value are discarded, and/or the image feature points are discarded except the image feature points with the weight coefficients equal to or higher than a second threshold value and the image feature points around the image feature points with the weight coefficients equal to or higher than the second threshold value. When pattern matching is employed for the scenic image recognition, the image feature point data generated in this step is used as the pattern. Therefore, in order to achieve the high-speed performance and high accuracy of the matching, it is important that the image feature point data should include only the image feature points useful for the pattern matching for the scenic image. The generated image feature point data is associated with the image-capturing position of the captured image corresponding to the image feature point data, and/or the image-capturing direction of the captured image corresponding to the image feature point data. Thus, the generated image feature point data becomes data for a database that is searchable using the image-capturing position and/or the image-capturing direction as a search condition (step 08). That is, the image feature point data is stored in the reference data DB 92 as the reference data used for the scenic image recognition, for example, as the pattern for the pattern matching (step 09).

Next, a procedure for determining the position of the vehicle (vehicle position) while the vehicle is actually traveling using the reference data DB 92 created by the above-described procedure will be described. As shown in FIG. 1, first, an actually-captured image, which is obtained by capturing an image of a scene using the vehicle-mounted camera, and the image-capturing position and the image-capturing direction of the actually-captured image, which are used to extract the reference data from the reference data DB 92, are input (step 11). The image-capturing position input in this step is an estimated vehicle position that is estimated using, for example, a GPS measurement unit. Data for matching, which is the image feature point data, is generated from the input captured image, through the step 02 to the step 07 described above (step 12). Simultaneously, a set of the reference data regarding the image-capturing position (the estimated vehicle position) and the reference data regarding positions ahead of, and behind the image-capturing position (the estimated vehicle position) is extracted as a matching candidate reference dataset, using the input image-capturing position (the estimated vehicle position) and/or the input image-capturing direction as the search condition (step 13).

Each reference data included in the extracted matching candidate reference dataset is set as the pattern, and the processing of pattern matching between each pattern and the generated data for matching is performed as the scenic image recognition (step 14). When the reference data, which is set as the pattern, matches the generated data for matching, the image-capturing position associated with the reference data that matches the generated data for matching is retrieved (step 15). The retrieved image-capturing position is determined to be a formal vehicle position, instead of the estimated vehicle position (step 16).

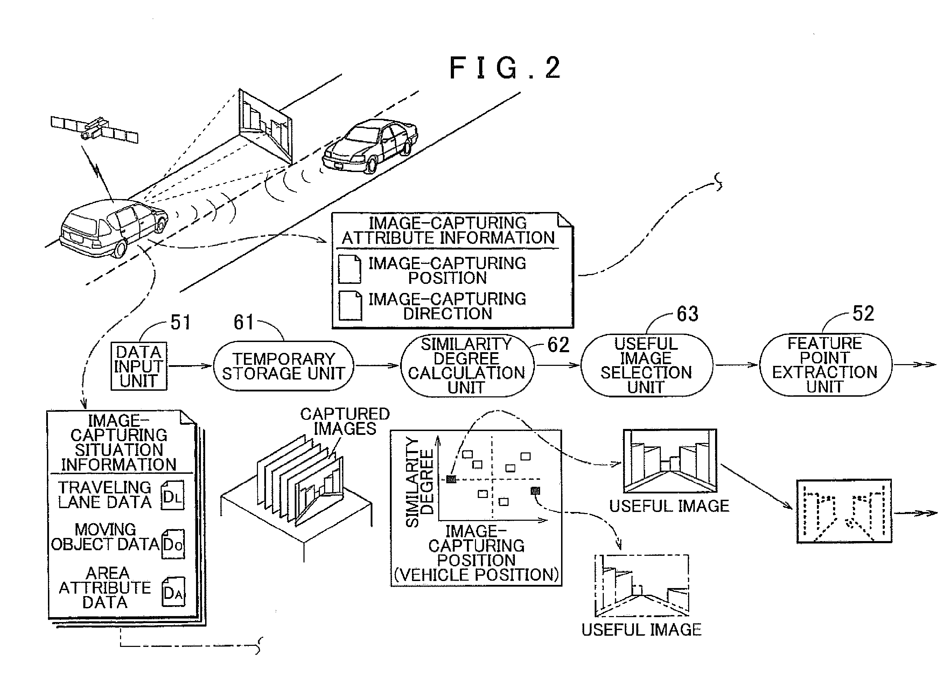

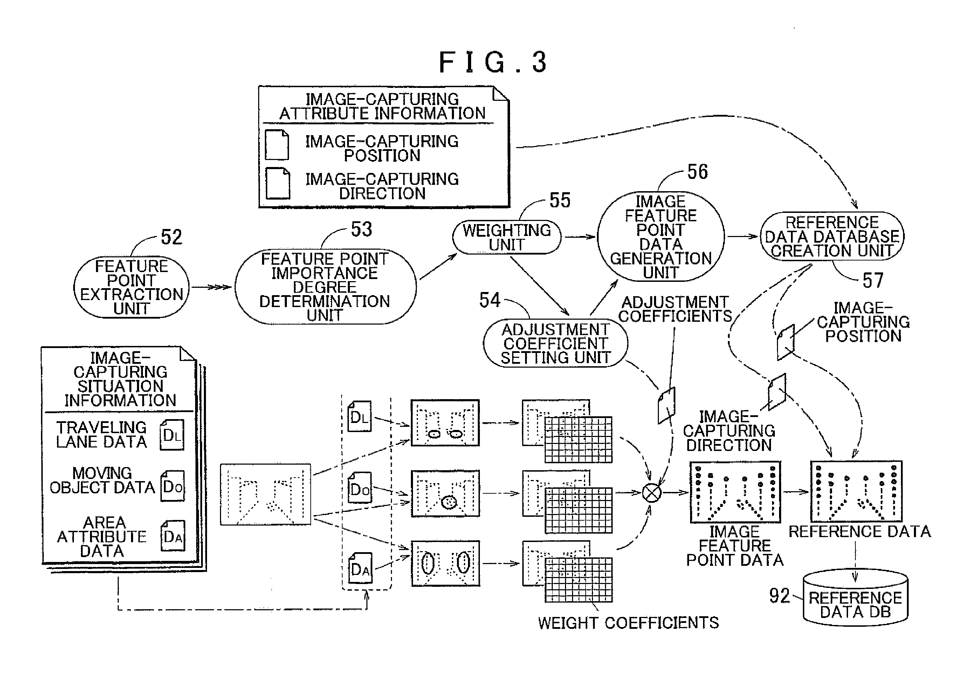

Next, the image processing system according to the embodiment of the invention, which generates the reference data from the captured image based on the above-described basic concept of the position measurement technology, will be described with reference to FIG. 2 and FIG. 3.

FIG. 2 is a functional block diagram showing a former-stage group of main functions of the image processing system, and FIG. 3 is a functional block diagram showing a latter-stage group of the main functions of the image processing system. The image processing system includes functional units, such as a data input unit 51, a temporary storage unit 61, a similarity degree calculation unit 62, a useful image selection unit 63, a feature point extraction unit 52, a feature point importance degree determination unit 53, a weighting unit 55, an adjustment coefficient setting unit 54, an image feature point data generation unit 56, and a reference data database creation unit 57. Each of the functions may be implemented by hardware, software, or combination of hardware and software.

The captured image obtained by capturing an image of a scene using the camera provided in a vehicle, the image-capturing attribute information including the image-capturing position and the image-capturing direction at the time of image capturing, and the image-capturing situation information are input to the data input unit 51. The vehicle may be a vehicle that is traveling for the purpose of creating the reference data. In an example in which the image processing system is provided in the vehicle, as described in this embodiment, the captured image, the image-capturing attribute information, and the image-capturing situation information are input to the data input unit 51 in real time. However, the image processing system may be installed in a outside center, for example, data processing center. In this case, the captured image, the image-capturing attribute information, and the image-capturing situation information are temporarily stored in a storage medium, and these data are input to the data input unit 51 in a batch processing manner. Methods of generating the captured image and the image-capturing attribute information are known, and therefore, the description thereof is omitted.

The image-capturing situation information is information indicating the possibility that a specific subject is included in the captured image. Examples of the specific subject include objects that define a traveling lane in which the vehicle travels, such as a guide rail and a groove at a road shoulder, moving objects such as a nearby traveling vehicle, an oncoming vehicle, a bicycle, and a pedestrian, and scenic objects that are the features of a mountainous area, a suburban area, an urban area, a high-rise building area, and the like, such as a mountain and a building. In the embodiment, the contents of the image-capturing situation information include traveling lane data D_{L}, moving object data Do, and area attribute data D_{A}. The traveling lane data D_{L} is data that shows a region of the traveling lane, and a region outside a road, in the captured image. The traveling lane data D_{L} is obtained based on the result of recognition of white lines, a guide rail, and a safety zone. The white lines, the guide rail, and the safety zone are recognized through the image processing performed on the captured image. The moving object data Do is data that shows a region where a moving object near the vehicle exists in the captured image. The moving object near the vehicle is recognized by a vehicle-mounted sensor that detects an obstacle, such as a radar. The area attribute data D_{A} is data that shows the type of an image-capturing area in which the captured image is obtained by capturing the image, that is, an area attribute of the image-capturing area. Examples of the area attribute include a mountainous area, a suburban area, an urban area, and a high-rise building area. The type, that is, the area attribute of the image-capturing area is recognized based on the vehicle position when the captured image is obtained by capturing the image, and map data.

The temporary storage unit 61 is the working memory that temporarily stores the input captured images in each processing group. The temporary storage unit 61 is generally allocated to a portion of a main memory. The temporary storage unit 61 temporarily stores the plurality of the captured images whose image-capturing positions are included in the predetermined region, among the captured images that are sequentially obtained during travel, that is, the plurality of the captured images in the processing group, as the processing target captured images. In the embodiment, the processing group includes the required number of the captured images whose image-capturing positions are included in an error range whose center is an estimated vehicle position. The required number is determined in advance according to, for example, a road situation. Note that the error range is a range defined as a region with a predetermined radius based on the estimated vehicle position, taking into account an error that occurs when the vehicle position is estimated based on position coordinates measured using GPS signals and/or dead reckoning navigation.

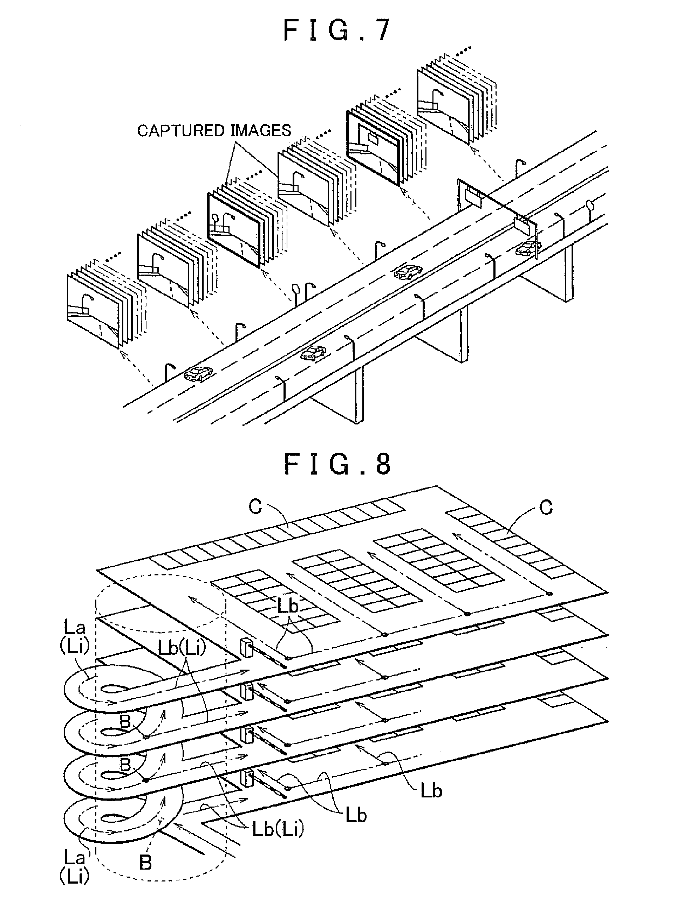

The similarity degree calculation unit 62 calculates the similarity degrees of the captured images stored in the temporary storage unit 61. For example, as shown in FIG. 7, when the vehicle is traveling, for example, on an expressway, images of similar scenes may be periodically captured. When reference images for the scenic image recognition, for example, the patterns for the pattern matching are generated based on these captured images, because there are many similar patterns, it is difficult to perform accurate one-to-one correspondence matching. As a result, it is difficult to accurately determine the image-capturing position (vehicle position). In order to avoid this situation, it is preferable that the similarity degrees of the obtained captured images should be calculated, and the reference images (i.e., the patterns) may be prepared in advance by selecting the plurality of the captured images with similarity degrees that are different from each other as much as possible. Further, even in the case where the plurality of the captured images with the similarity degrees that are different from each other as much as possible are selected, if the image-capturing positions are unevenly distributed and there is a long interval between the image-capturing positions of the captured images, it is difficult to accurately detect the vehicle position in a section between the image-capturing positions. Therefore, when the reference images are prepared, it is preferable to select the captured images so that both of the similarity degrees and the image-capturing positions of the selected captured images are appropriately dispersed. Accordingly, first, the similarity degree calculation unit 62 calculates the similarity of each captured image, and assigns the calculated similarity degree to the captured image.

Various methods of calculating the similarity degree are known. An index value that represents the feature of each captured image may be obtained using various image characteristics, and the index value may be used as the similarity degree. Hereinafter, examples of the index value will be described.

### (1) Method using the average value of pixel values

First, the average value of pixel values for each color component in the entire image is obtained. Then, the three-dimensional Euclidean distance between the average values of the pixel values for each color component in the images to be compared with each other is obtained. The obtained three-dimensional Euclidean distance is normalized.

### (2) Method using image histograms

First, a luminance histogram for each of color components in the image is generated. Then, the square-root of sum of squares of differences between values at a plurality of levels in the luminance histograms for the images to be compared to each other is obtained. The sum of the square roots obtained for the color components is obtained. The obtained sum is normalized.

### (3) Method using differences between pixel values at the same positions

When the resolutions of the images to be compared to each other are made equal to each other, the square-root of sum of squares of differences between pixel values in the images at the same positions is obtained. The obtained square-root is normalized.

### (4) Method using spatial frequency histograms for the images

First, Fourier-transformation is performed on spatial frequencies in the image to generate a frequency-luminance histogram. Then, the square-root of sum of squares of differences between values at a plurality of levels in the frequency-luminance histograms for the images to be compared with each other. The obtained square-root is normalized.

In addition to the above-described methods, other methods of calculating the similarity degree using various image characteristics may be employed. Thus, the invention is not limited to a specific method of calculating the similarity degree. The method of calculating the similarity degree may be changed according to a situation where the captured image is obtained, for example, according to whether the vehicle is traveling in a mountainous area, an urban area, or on an expressway.

The useful image selection unit 63 selects the useful images from among the captured images so that the similarity degrees of the selected captured images are different from each other, by comparing the similarity degrees, which have been obtained in the manner as described above, with each other. At this time, when the captured images are disposed according to the similarity degrees and the image-capturing positions in a two-dimensional plane defined by axes indicating the similarity degree and the image-capturing position, it is preferable to select a predetermined number of the captured images as the useful images in a manner such that dispersion of the selected captured images is maximum. For example, the following algorithm may be employed. In the algorithm, a predetermined number of index points are disposed in a two-dimensional plane in a manner such that the dispersion is maximum, and the captured image closest to each index point in the two-dimensional plane is preferentially assigned to the index point. The captured images assigned to the predetermined number of the index points are selected as the useful images. By employing this algorithm, it is possible to relatively simply perform the processing of selecting the useful images taking into account the similarity degrees.

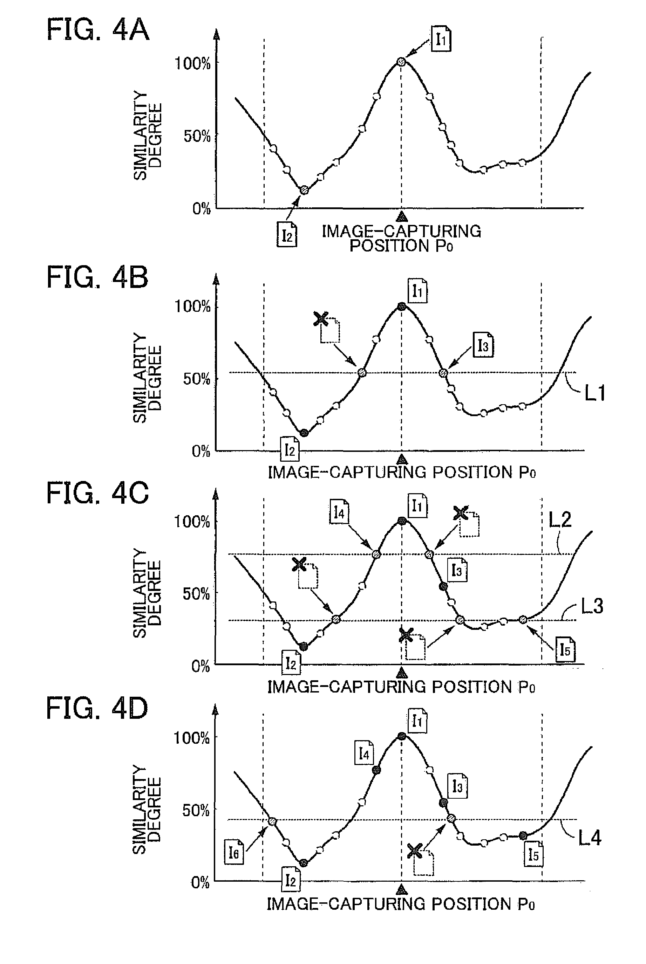

Also, when the captured images are obtained by sequentially capturing images during travel of the vehicle and the similarity degrees of the captured images vary periodically, it is possible to perform the processing of selecting the useful images based on the similarity degrees, using a simpler selection algorithm. The selection algorithm, which is performed after the similarity degrees are assigned in the method as described above, will be described with reference to schematic diagrams in FIGS. 4A to 4D.

In each of FIGS. 4A to 4D, a plurality of the obtained captured images are plotted in a two-dimension coordinate plane in which an abscissa axis indicates the image-capturing position, and an ordinate axis indicates the similarity degree. The processing target captured images are all the captured images whose image-capturing positions are in the error range. The center of the error range is the estimated vehicle position (the image-capturing position P₀ in each of FIGS. 4A to 4D, and the borderlines of the error range are shown by dotted lines on both sides of the image-capturing position P₀). First, as shown in FIG. 4A, the captured image with the highest similarity degree (i.e., the captured image used as a basis for calculating the similarity degrees) is selected as a first useful image I₁. In each of FIGS. 4A to 4D, the selected captured images (useful images) are shown by file icons with reference numerals. Further, the captured image with the lowest similarity degree is selected as a second useful image I₂. Next, as shown in FIG. 4B, the captured image that increases the dispersion of the useful images to a larger extent is selected as a third useful image I₃, from among the captured images that belong to an intermediate line indicating an intermediate similarity degree between the highest similarity and the lowest similarity (hereinafter, the intermediate line will be referred to as "first selection line L1"). The phrase "the captured images that belong to the first selection line L1" signifies the captured images that are located on the first selection line L1, or the captured images that are located so that vertical distances between the captured images and the first selection line L1 are in a permissible range, in the two-dimensional plane. Further, as shown in FIG. 4C, the captured image that increases the dispersion of the useful images to a larger extent is selected as a fourth useful image I₄, from among the captured images that belong to a second selection line L2 that shows an intermediate similarity degree between the highest similarity degree and the similarity degree shown by the first selection line L1. The captured image that increases the dispersion of the useful images to a larger extent is selected as a fifth useful image I₅, from among the captured images that belong to a third selection line L3 that shows an intermediate similarity degree between the lowest similarity degree and the similarity degree shown by the first selection line L1. Further, as shown in FIG. 4D, The captured image that increases the dispersion of the useful images to a larger extent is selected as a sixth useful image I₆, from among the captured images that belong to a fourth selection line L4 that shows an intermediate similarity degree between the similarity degree shown by the second selection line L2 and the similarity degree shown by the third selection line L3.

The above-described selection processing is continuously performed until the predetermined number of the useful images are selected. Thus, the useful image selection unit 63 selects the predetermined number of the captured images whose similarity degrees are different from each other, as the useful images. In an example in FIG. 7, the captured images that are likely to be selected as the useful images are shown by thick lines. After the useful image selection unit 63 finishes the processing of selecting the useful images, the selected useful images are subjected to feature point extraction processing that is the first processing in a latter-stage processing.

The feature point extraction unit 52 extracts the edge points from the captured image (the useful image), as the image feature points, using an appropriate operator. The feature point importance degree determination unit 53 determines the importance degrees of the extracted image feature points (the edge points). In the embodiment, among the edge points obtained through the edge detection processing, particularly, the line segment edge points (the straight line component edge points) that constitute one line segment, and the corner edge point (the intersection edge point) are treated as the useful image feature points. The corner edge point (the intersection edge point) corresponds to the intersection at which the line segments intersect with each other, preferably, the line segments are substantially orthogonal to each other. That is, the feature point importance degree determination unit 53 assigns a high importance degree to the line segment edge points as compared to an importance degree assigned to the edge points other than the line segment edge points. The feature point importance degree determination unit 53 assigns a high importance degree to the corner edge point, as compared to an importance degree assigned to the line segment edge points other than the corner edge point.

The feature point importance degree determination unit 53 determines the importance degrees of the image feature points extracted by the feature point extraction unit 52, based on the contents of each data included in the image-capturing situation information. For example, when the contents of the traveling lane data D_{L} are used, a high importance degree is assigned to the image feature point in a road shoulder-side region outside the traveling lane in the captured image, as compared to an importance degree assigned to the image feature point in a region inside the traveling lane in the captured image. When the moving object data Do is used, a low importance degree is assigned to the image feature point in a region where a moving object exists in the captured image, as compared to an importance degree assigned to the image feature point in a region where the moving object does not exist in the captured image. Further, when the contents of the area attribute data D_{A} are used, a rule for assigning the importance degrees to the image feature points in accordance with the positions of the image feature points in the captured image is changed in accordance with the above-described area attribute. For example, in the captured image of a mountainous area, because there is a high possibility that there is sky above a central optical axis for image capturing, and there are woods on the right and left sides of the central optical axis for image capturing, a high importance degree is assigned to the image feature point in a center region around the central optical axis for image capturing, as compared to an importance degree assigned to the image feature point in a region other than the central region. In the captured image of a suburban area, because there is not much traffic, and there are structural objects such as houses around, a high importance degree is assigned to the image feature point in a region below the central optical axis for image capturing, as compared to an importance degree assigned to the image feature point in a region above the central optical axis for image capturing. In the captured image of an urban area, because there is much traffic, a high importance degree is assigned to the image feature point in a region above the central optical axis for image capturing, as compared to a region below the central optical axis for image capturing. In the captured image of a high-rise building area, because there are many elevated roads and elevated bridges, a high importance degree is assigned to the image feature point in a region above the central optical axis for image capturing, as compared to a region below the central optical axis for image capturing.

The weighting unit 55 assigns weight coefficients to the image feature points in accordance with the importance degrees assigned by the feature point importance degree determination unit 53. Because a high importance degree is assigned to the image feature point that is considered to be important for performing accurate image recognition (accurate pattern matching), a high weight coefficient is assigned to the image feature point to which a high importance degree has been assigned. On the other hand, taking into account that there is a high possibility that the image feature point, to which a low importance degree has been assigned, is not used for the actual image recognition, or is deleted from the reference data, a low weight coefficient is assigned to the image feature point to which a low importance degree has been assigned so that the low weight coefficient is used for determining whether to select or delete the image feature point.

The adjustment coefficient setting unit 54 calculates adjustment coefficients used for changing the weight coefficients assigned by the weighting unit 55, in view of the distribution state of the weight coefficients in the captured image. The importance degrees, which have been assigned to the image feature points extracted by the feature point extraction unit 52 based on the image-capturing situation information, include certain errors. As a result, there is considered to be a possibility that the image feature points, to which high importance degrees have been assigned, are randomly distributed. Therefore, when the image feature points to which high importance degrees have been assigned are unevenly distributed, in other words, when the image feature points to which high weight coefficients have been assigned by the weighting unit 55 are unevenly distributed, the adjustment coefficient setting unit 54 is used to make the distribution less uneven. When the dispersion of the image feature points obtained through the computation processing indicates that the image feature points to which the high weight coefficients have been assigned are unevenly distributed, the adjustment coefficient is set to increase the weight coefficient(s) of the image feature points in a region where the density of the image feature points to which the high weight coefficients have been assigned is low, and the adjustment coefficient is set to decrease the weight coefficient(s) of the image feature points in a region where the density of the image feature points to which the high weight coefficients have been assigned is high.

The image feature point data generation unit 56 generates the image feature point data for each captured imaged, by performing processing on the image feature points based on the weight coefficients assigned by the weighting unit 55, or based on the weight coefficients and the assigned adjustment coefficients in some cases. When generating the image feature point data, the number of the image feature points may be reduced to efficiently perform the matching processing, by deleting the image feature points with the weighting coefficients equal to or lower than a threshold value. Also, the image feature point data may be provided with the weight coefficients so that the weight coefficients are associated with the image feature points in the reference data as well, and the weight coefficients are used for calculating weighted similarity when the pattern matching processing is performed.

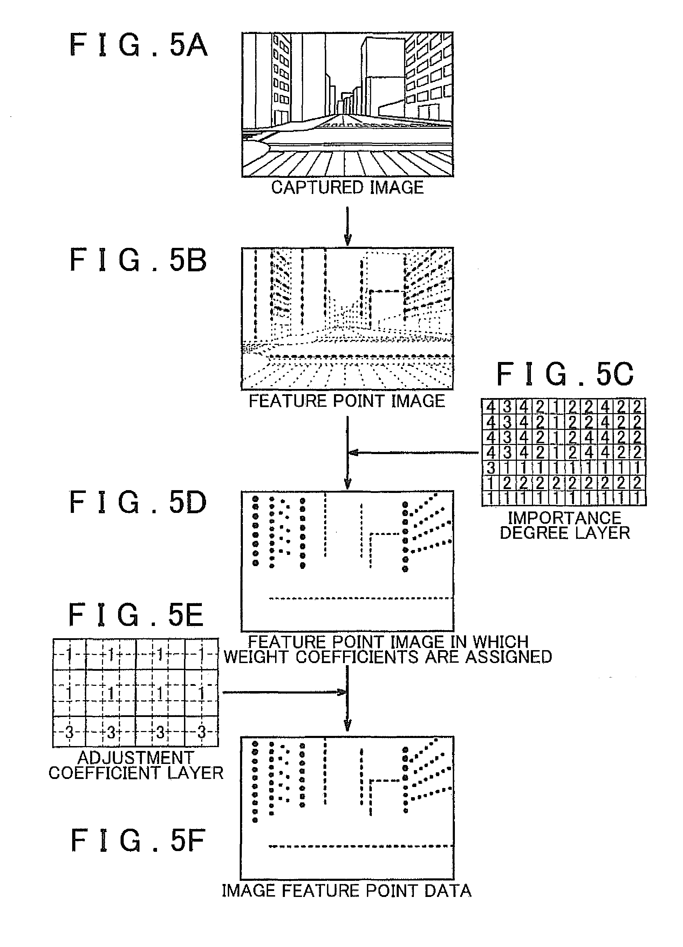

The processing of distributing the image feature points in the image feature point data over an entire region of the captured image as widely as possible using the above-described adjustment coefficients will be described with reference to a schematic explanatory diagram shown in FIGS. 5A to 5F. A feature point image (FIG. 5B) is generated by extracting the image feature points from the captured image (FIG. 5A). The importance degree is assigned to each image feature point in the feature point image. FIG. 5C shows the importance degrees corresponding to the image feature points in the form of an importance degree layer corresponding to the feature point image, in order to make it possible to schematically understand how the importance degrees are assigned. The weighting coefficient is assigned to each image feature point using the importance degree layer. FIG. 5D shows the image feature points to which the weight coefficients have been assigned, in the form of the feature point image in which the size of the image feature point increases as the weight coefficient of the image feature point increases. If processing is performed on the image feature points, for example, to delete the image feature points to which the weight coefficients equal to or lower than the threshold value have been assigned, that is, for example, if the image feature points other than the large-sized image feature points in FIG. 5D are deleted, the image feature points located in a lower region in the feature point image are removed. As a result, the remaining image feature points (that is, the image feature points in the image feature point data) may be extremely unevenly distributed. In order to avoid the uneven distribution of the image feature points, the degree of distribution of the image feature points in the feature point image is calculated, and the adjustment coefficients are set to increase the weight coefficient(s) of the image feature points in a region where the density of the remaining image feature points is low as a result of performing processing on the image feature points. In order to make it possible to schematically understand the adjustment coefficients that are set in the above-described manner, FIG. 5E shows groups of the adjustment coefficients in the form of an adjustment coefficient layer corresponding to the feature point image. In the adjustment coefficient layer, the adjustment coefficients are arranged in a matrix manner (i.e., the adjustment coefficient is assigned to each section composed of a plurality of pixel regions). The image feature point data generation unit 56 performs processing on the image feature points using the weight coefficients and the weight coefficients that are finally set based on the adjustment coefficients, thereby generating the image feature point data shown in FIG. 5F for each captured image.

The reference data database creation unit 57 creates the reference data that is used for the scenic image recognition by associating the image feature point data generated by the image feature point data generation unit 56 with the image-capturing attribute information regarding the captured image corresponding to the image feature point data, and creates the database of the reference data. Thus, the reference data database creation unit 57 creates the database of the reference data. That is, the reference data is stored in the reference data DB 92.

The example, in which the importance degree of each image feature point is determined, and as a result, the weight coefficient of each image feature point is set, has been described above. However, the processing may be performed for each image feature point group. In this case, for example, the region of the captured image may be divided into a plurality of image sections, and the feature point importance degree determination unit 53 may divide the image feature points into image feature point groups so that each image feature point group includes the image feature points in the same image section, and may perform the processing for each image feature point group. In this case, the feature point importance degree determination unit 53 may assign the same importance degree to the image feature points included in the same image feature point group. Similarly, the weighting unit 55 may set the weight coefficient for each image feature point group. In this case, the image sections may be set in a manner such that each image section is composed of one pixel included in the captured image, or each image section is composed of a plurality of pixels. Thus, in the embodiment of the invention, each image section may be composed of one or more pixels.

Next, a vehicle-mounted car navigation system, which corrects the vehicle position by performing the scenic image recognition (the image feature point pattern matching) using the reference data DB 92 created by the above-described image processing system, will be described. FIG. 4 shows functional blocks in an example in which the car navigation system is installed in a vehicle-mounted LAN. The car navigation system includes an input operation module 21, a navigation control module 3, a vehicle position detection module 4, an image-capturing situation information generation unit 7, and a database 9 including the above-described reference data DB 92 and a road map database (hereinafter, simply referred to as "road map DB") 91 in which road map data for car navigation is stored.

The navigation control module 3 includes a route setting unit 31, a route search unit 32, and a route guidance unit 33. For example, the route setting unit 31 sets a departure point such as the current vehicle position, a destination that has been input, and pass-through points, and a traveling condition (for example, a condition as to whether an expressway is to be used). The route search unit 32 is a processing unit that performs computation processing for searching for a guidance route from the departure point to the destination based on the condition set by the route setting unit 31. The route guidance unit 33 is a processing unit that performs computation processing for providing appropriate route guidance to a driver in accordance with the route from the departure point to the destination, which is retrieved by the route search unit 32 as a result of searching. The route guidance unit 33 provides the route guidance, using guidance displayed on the screen of a monitor 12, voice guidance output from a speaker 13, and the like.

The vehicle position detection module 4 has a function of correcting the estimated vehicle position obtained by performing conventional position calculation using the GPS and performing conventional position calculation using dead reckoning navigation. The vehicle position detection module 4 corrects the estimated vehicle position based on the vehicle position determined by the scenic image recognition using the estimated vehicle position. The vehicle position detection module 4 includes a GPS processing unit 41, a dead reckoning navigation processing unit 42, a vehicle position coordinate calculation unit 43, a map matching unit 44, a vehicle position determination unit 45, a captured image processing unit 5, and a scene matching unit 6. The GPS processing unit 41 is connected to a GPS measurement unit 15 that receives GPS signals from GPS satellites. The GPS processing unit 41 analyzes the signals from the GPS satellites received by the GPS measurement unit 15, calculates the current position of the vehicle (i.e., the latitude and the longitude), and transmits the current position of the vehicle to the vehicle position coordinate calculation unit 43 as GPS position coordinate data. The dead reckoning navigation processing unit 42 is connected to a distance sensor 16 and a direction sensor 17. The distance sensor 16 is a sensor that detects the speed and the moving distance of the vehicle. For example, the distance sensor 16 includes a vehicle speed pulse sensor that outputs a pulse signal each time the drive shaft, the wheel, or the like of the vehicle rotates by a certain amount, a yaw rate/acceleration sensor that detects the acceleration of the vehicle, and a circuit that integrates the detected values of the acceleration. The distance sensor 16 outputs information on the speed of the vehicle and information on the moving distance of the vehicle, which are the results of detection, to the dead reckoning navigation processing unit 42. For example, the direction sensor 17 includes a gyro sensor, a geomagnetic sensor, an optical rotation sensor and a rotary variable resistor that are attached to the rotational unit of a steering wheel, and an angle sensor attached to a wheel unit. The direction sensor 17 outputs information on the direction, which is the result of detection, to the dead reckoning navigation processing unit 42. The dead reckoning navigation processing unit 42 computes dead reckoning navigation position coordinates based on the moving distance information and the direction information, which are transmitted to the dead reckoning navigation processing unit 42 at every moment, and transmits the computed dead reckoning navigation position coordinates to the vehicle position coordinate calculation unit 43 as the dead reckoning navigation position coordinate data. The vehicle position coordinate calculation unit 43 performs computation processing to determine the coordinates of the vehicle position based on the GPS position coordinate data and the dead reckoning navigation position coordinate data, using a known method. The calculated vehicle position information includes a measurement error and the like. Therefore, the calculated vehicle position may deviate from a road in some cases. Thus, the map matching unit 44 adjusts the vehicle position information so that the vehicle is positioned on a road shown in the road map. The coordinates of the vehicle position are transmitted to the vehicle position determination unit 45 as the estimated vehicle position.

The captured image processing unit 5 substantially includes most of functional units that constitute the image processing system shown in FIG. 2 and FIG. 3. The captured image processing unit 5 includes the data input unit 51, the feature point extraction unit 52, the feature point importance degree determination unit 53, the weighting unit 55, the adjustment coefficient setting unit 54, and the image feature point data generation unit 56. When the captured image of a scene ahead of the vehicle, which is the image captured by the vehicle-mounted camera 14, is input to the data input unit 51, the feature point extraction unit 52 extracts the image feature points from the input captured image of the scene ahead of the vehicle. The image feature point data generation unit 56 generates the image feature point data for each captured image of the scene ahead of the vehicle, using the image feature points. At this time, the weighting unit 55 performs processing of assigning weights to the image feature points (the adjustment coefficient setting unit 54 may perform adjustment in some cases). The generated image feature point data is output to the scene matching unit 6 as the data for matching. The image-capturing situation information used by the feature point importance degree determination unit 53 is generated by the image-capturing situation information generation unit 7 provided in the vehicle, and transmitted to the captured image processing unit 5. The image-capturing situation information generation unit 7 is connected to the vehicle-mounted camera 14 in order to generate the above-described traveling lane data D_{L}, and the image-capturing situation information generation unit 7 receives the captured image that is the same as the captured image transmitted to the captured image processing unit 5. The traveling lane data D_{L} is created by performing image processing on the received captured image, using a known algorithm. The image-capturing situation information generation unit 7 is connected to a sensor group 18 for detecting an obstacle, in order to create the above-described moving object data Do. The image-capturing situation information generation unit 7 creates the moving object data Do based on sensor information transmitted from the sensor group 18. Further, the image-capturing situation information generation unit 7 is connected to the vehicle position determination unit 45 and the database 9, in order to create the above-described area attribute data D_{A}. The image-capturing situation information generation unit 7 obtains the area attribute of an area where the vehicle is currently traveling, by searching the database 9 using the coordinates of the vehicle position transmitted from the vehicle position determination unit 45 as a search condition. Examples of the area attribute include a mountainous area and an urban area. The image-capturing situation information generation unit 7 creates the area attribute data D_{A} based on the obtained area attribute.

The scene matching unit 6 performs matching between the reference data extracted from the reference data DB 92 and the image feature point data (the data for matching) output from the image feature point data generation unit 56. That is, the scene matching unit 6 performs the pattern matching processing on the image feature point data transmitted from the captured image processing unit 5, using, as the pattern, the reference data extracted from the reference data DB 92 based on the estimated vehicle position transmitted from the vehicle position determination unit 45. When the reference data matches the image feature point data, the image-capturing position associated with the matching reference data is retrieved. The retrieved image-capturing position is transmitted to the vehicle position determination unit 45, as the vehicle position. The vehicle position determination unit 45 corrects the vehicle position, that is, replaces the estimated vehicle position with the transmitted vehicle position.

The car navigation system further includes, as peripheral devices, an input operation module 21, a display module 22, a voice generation module 23, and a vehicle behavior detection module 24. The input operation module 21 includes an input device 11 including a touch panel and a switch; and an operation input evaluation unit 21 a that transforms an operation input through the input device 11 to an appropriate operation signal, and transmits the operation signal to the car navigation system. The display module 22 causes the monitor 12 to display image information necessary for car navigation. The voice generation module 23 causes the speaker 13 and a buzzer to output voice information necessary for car navigation. The vehicle behavior detection module 24 detects various behaviors of the vehicle, such as a braking behavior, an accelerating behavior, and a steering behavior of the vehicle, based on behavior data transmitted through the vehicle-mounted LAN.

As described above, in the image processing system according to the embodiment, the predetermined number of the useful images are selected from among the captured images obtained by capturing images in the predetermined travel distance region, in a manner such that the similarity degrees of the selected captured images are different from each other and the image-capturing positions of the selected captured images are different from each other (more specifically, the predetermined number of the useful images are selected from among the captured images disposed according to the similarity degrees and the image-capturing positions in the two-dimensional plane, in a manner such that the dispersion of the selected captured images is maximum). A set of the reference data is generated from the useful images.

In order to accurately detect the vehicle position through the scenic image recognition, it is necessary to perform processing on many captured images obtained by sequentially capturing images in the predetermined region. For example, as shown in FIG. 7, when there is a possibility that images of similar scenes may be periodically captured, a plurality of the reference data having a plurality of image-capturing positions may match the captured image. Therefore, it is difficult to accurately determine the vehicle position, and it takes long time to perform the matching processing. However, in the image processing system with the above-described configuration, the matching processing (scenic image recognition) is performed based on the plurality of the reference data whose similarity degrees are different from each other, and whose image-capturing positions are different from each other. Thus, it is possible to greatly improve the efficiency of the matching processing.

Also, in the image processing system according to the embodiment, the processing target captured images are disposed according to the similarity degrees and the image-capturing positions in the two-dimensional plane defined by the axes indicating the similarity degree and the image-capturing position, and the predetermined number of the processing target captured images are selected as the useful images in a manner such that the dispersion of the selected processing target captured images is maximum. That is, the useful images are optimally selected by performing computation to select the predetermined number of coordinate points from among coordinate points indicating the processing target captured images in the two-dimensional plane whose coordinate axes indicate the similarity degree and the image-capturing position, in a manner such that the disperse of the selected coordinate points is maximum.

In the field of car navigation, it is considered that an actual vehicle position exists in the error range based on the estimated vehicle position. Taking into account this technology, it is preferable that the predetermined region including the image-capturing positions of the processing target captured images may correspond to the error range of the estimated vehicle position. It is possible to create the reference data database that makes it possible to efficiently perform the matching processing in the error range, by obtaining many processing target captured images in the predetermined region, and selecting the predetermined number of the processing target captured images as the useful images in a manner such that the similarity degrees assigned to the selected processing target captured images are different from each other.

In the image processing system according to the embodiment, the reference data are collected based on the captured images that are sequentially obtained during travel of the vehicle. At this time, basically, the reference data are collected while the vehicle continues to travel along the predetermined path. In view of this situation, it is preferable that the predetermined region including the image-capturing positions of the processing target captured images may correspond to the predetermined travel distance (travel distance region). It is possible to create the reference data database that makes it possible to efficiently perform the matching processing in the predetermined travel distance region, by obtaining many processing target captured images in the travel distance region, and selecting the predetermined number of the processing target captured images as the useful images in a manner such that that the similarity degrees assigned to the selected processing target captured images are different from each other. In this case as well, it is preferable that the travel distance region may correspond to the error range of the estimated vehicle position.

In the image processing system according to the embodiment, the image feature point data is generated for each captured image, based on the importance degrees of the image feature points. The image feature points are extracted from the captured image, and the importance degree of each image feature point in the scenic image recognition greatly depends on a factor such as the position of the image feature point and the type of an object from which the image feature point is obtained. For example, the image feature point obtained from an uneven surface of a road is not useful for determining the vehicle position. Also, the image feature point obtained from a moving object, such as a nearby traveling vehicle, is not useful for determining the vehicle position, because the image feature point does not remain for a long time. Thus, it is possible to generate the image feature point data suitable for the scenic image recognition by assigning importance degrees to the image feature points, and performing processing on the image feature points in accordance with the importance degrees, as in the configuration according to the above-described embodiment.

It is preferable that the image feature point may be a point in the image, which is stably detected. Therefore, the edge point detected using an edge detection filter or the like is generally used. Edge point groups, which constitute linear edges showing the outline of a building, the outline of the window of a building, and the outlines of various billboards, are appropriate image feature points used in the embodiment of the invention. Accordingly, in the embodiment of the invention, it is preferable that the image feature points extracted by the feature point extraction unit 52 may be the edge points, and when the edge points are straight line component edge points that form a straight line, it is preferable that a high importance degree may be assigned to the straight line component edge points, as compared to an importance degree assigned to the edge points other than the straight line component edge points. With this configuration, it is possible to create the reference data that makes it possible to recognize a specific artificial object that is the feature of a scene, such as a building or a billboard, in an accurate and simple manner. In this case, it is preferable that a high importance degree may be assigned to an intersection edge point among the straight line component edge points, as compared to an importance degree assigned to the straight line component edge points other than the intersection edge point. The intersection edge point is the intersection of two straight line components. Thus, it is possible to limit the image feature points included in the reference data, to the corners, that is, the intersection edge points that are the most important feature points in a building, a bridge, a billboard, and the like. Thus, it is possible to reduce a computation load in the image recognition. Note that the intersection edge points may be detected using, for example, the Harris operator.

### Other embodiments

(1) In the above-described embodiment, a situation shown in FIG. 7 is assumed to be an example of a situation to which the image processing system according to the embodiment of the invention is appropriately applied. In FIG. 7, the predetermined region is set to the predetermined travel distance region on a single path. Instead of this configuration, a configuration, in which the predetermined region is set to extend over a plurality of paths that are two-dimensionally or three-dimensionally separate from each other, may be employed. The phrase "a plurality of paths that are two-dimensionally or three-dimensionally separate from each other" includes a plurality of paths that are arranged in a manner such that at least one path extends from the other path. An example of the situation where the predetermined region is set in this manner is a situation where the vehicle travels in an area in which there are a plurality of levels, for example, in a multilevel parking garage shown in FIG. 8. In this situation as well, there is a possibility that an image of a similar scene may be captured at each level (floor).

In this case, a path leading to a parking section C at each level may be regarded as a path (a branch path Lb) that extends from a spiral path (a basic path La) leading to the highest level. In the example in FIG. 8, the basic path La and a plurality of branch paths Lb constitute a plurality of paths, that is, the plurality of branch paths Lb extend from a plurlaity of branch points B. The basic path La and the most upstream portion of the branch path Lb (i.e., a portion of the branch path Lb that is closest to the basic path La) at each level are regarded as an identification target path Li. Thus, one identification target path Li is set at each of a plurality of levels. The predetermined region is set to extend over a three-dimensional space, and to include all the pluraltiy of identification target paths Li. In FIG. 8, the outer edge of the predetermined region is schematically shown by a dashed line. In the example in FIG. 8, the predetermined region is a cylindrical region corresponding to the error range of the estimated vehicle position. The predetermined region may be set so that the predetermined region includes each branch point B, or may be set so that the predetemimed region does not include each branch point B.

Even when the predetermined region is set to extend over a three-dimensional space in the above-described manner, a plurality of the captured images obtained by capturing images in the predetermined region are regarded as the processing target captured images, and a set of the reference data is generated by selecting a predetermined number of the processing target captured image from among the processing target captured images as the useful images, in a manner such that the similarity degrees of the selected processing target captured images are different from each other and the image-capturing positions of the selected processing target captured images are different from each other, as in the above-described embodiment. In this case, because the plurality of the identification target paths Li extend at the plurality of levels, a plurality of the captured images that are intermittently input are the processing target captured images.

In this case, the useful image selection unit 63 further selects at least one processing target captured image for each of the plurality of the identification target paths Li, as the useful image. That is, the useful image selection unit 63 selects the predetermined number of the useful images from among the plurality of the processing target captured images, in a manner such that the image-capturing position of at least one of the finally selected useful images is included in each of the plurality of the identification target paths Li that are set at the respective levels, and the similarity degrees of the finally selected useful images are different from each other. A set of the reference data is generated based on the useful images selected by the useful image selection unit 63 through the processing described in the above-described embodiment. The set of the reference data is stored in the reference data DB 92, that is, a database of the reference data is created. When the matching processing is performed as the scenic image recognition based on the reference data generated in the above-described manner, the matching processing is performed extremely efficiently, even if the plurality of the identification target paths are included in the predetermined region. Further, because one identification target path Li is set at each level in the embodiment, there is an advantage that it is possible to easily determine at which level the vehicle position is located among the plurality of levels.

In the above-described embodiment, the most upstream portion of the branch path Lb at each level is regarded as the identification target path Li. However, a downstream portion of the branch path Lb at each level may be included in the identification target path Li. In this case, the entire downstream portion of the branch path Lb may be included in the identification target path Li, or a part of the downstream portion of the branch path Lb may be also included in the identification target path Li. When a part of the downstream portion of the branch path Lb is included in the identification target path Li, an upstream portion in the downstream portion of the branch path Lb may be preferentially included in the identification target path Li. Thus, according to the embodiment of the invention, a part of, or all of the plurality of the paths that extend from one or more branch points may be regarded as the identification target paths.

(2) In the above-described embodiment, the situation, where "the predetermined region" is set to extend over the plurality of the paths that are separate from each other, for example, in the multilevel parking garage, has been described. However, the situation to which the image processing system according to the embodiment of the invention is applied is not limited to the above-described situation. For example, in the case where one road is divided at one or more branch points, and branch paths extending from the one road are arranged at a predetermined interval(s) and in parallel with each other on a plane, each of the branch paths may be regarded as the identification target path, and the predetermined region may be set to extend over a two-dimensional space, and to include all of the plurlaity of the identification target paths. In the case where one road is divided at one or more branch points, and branch paths extending from the one road are overlapped with each other and arranged in parallel with each other in a three-dimensional manner, each of the branch paths may be regarded as the identification target path, and the predetermined region may be set to extend over a three-dimensional space, and to include all of the plurlaity of the identification target paths. In these cases as well, a set of the referece data that is finally generated is suitable for the efficient matching processing. Also, there is an advantage that it is possible to easily determine on which branch path the vehicle position is located among the branch paths, through the scenic image recognition performed based on the set of the reference data generate in the above-described manner.

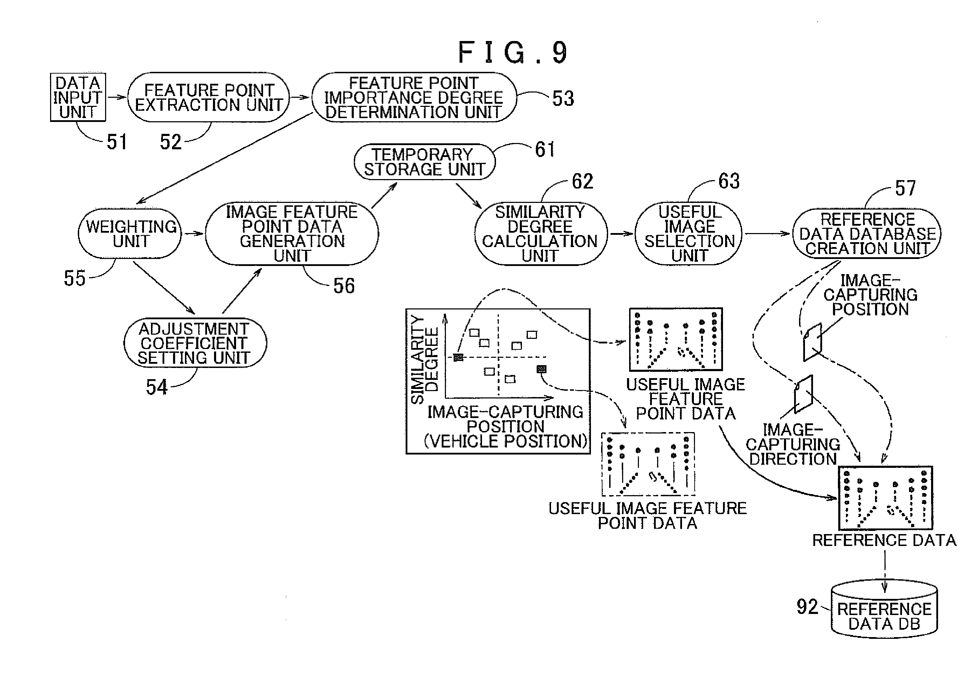

(3) In the above-described embodiment, as shown in FIG. 2 and FIG. 3, in the image processing system that creates the reference data from the captured image, the former-stage group includes the data input unit 51, the temporary storage unit 61, the similarity degree calculation unit 62, the useful image selection unit 63, and the latter-stage group includes the feature point extraction unit 52, the feature point importance degree determination unit 53, the weighting unit 55, the adjustment coefficient setting unit 54, the image feature point data generation unit 56, and the reference data database creation unit 57. Accordingly, the useful images are selected from among the plurality of the captured images to which the similarity degrees have been assigned, and a set of the image feature point data is generated from the selected useful images, and the set of the reference data is finally created. Instead of this configuration, the former-stage group may include the data input unit 51, the feature point extraction unit 52, the feature point importance degree determination unit 53, the weighting unit 55, the adjustment coefficient setting unit 54, and the image feature point data generation unit 56, and the latter-stage group may include the temporary storage unit 61, the similarity degree calculation unit 62, the useful image selection unit 63, and the reference data database creation unit 57, as shown in FIG. 9. In this configuration, first, a set of the image feature point data is generated from all the input captured images, and the set of the image feature point data is stored in the temporary storage unit 61. Then, the similarity degree of each image feature point data stored in the temporary storage unit 61 is calculated, and the similarity degree is assigned to the image feature point data. Then, the useful image selection unit 63 selects a predetermined number of the image feature point data as the useful image feature point data, in a manner such that the dispersion of the image-capturing positions of the set of the selected image feature point data and the dispersion of the similarity degrees of the set of the selected image feature point data are both high, as in the above-described embodiment. The reference data is generated by associating the useful image feature point data with the image-capturing position and/or the image-capturing direction.

With this configuration in the above-described embodiment, the similarity degrees of the set of the image feature point data are calculated. Therefore, there is a high possibility that when the similarity degrees of the set of the image feature point data are calculated, processing for calculating the similarity degrees is performed more easily than when the similarity degrees of the captured images are calculated. In this configuration, however, the set of the useful image feature point data is selected based on the similarity degrees of the set of the image feature point data after the set of the image feature point data is generated from all of the captured images obtained. Therefore, there is also a possibility that the load of processing of generating the set of the image feature point data is increased. Thus, it is preferable to select the image processing system in which the similarity degrees of the captured images are calculated, or the image processing system in which the similarity degrees of the set of the image feature point data are calculated, according to the specifications of the required reference data. Alternatively, a composite type image processing system with both of the configurations may be provided.

(4) The above-described selection algorithm for selecting the useful images in the above-described embodiment is merely an example of the selection algorithm, and the embodiment of the invention is not limited to this selection algorithm. For example, as another example of the selection algorithm for selecting the useful images, the following algorithm may be employed. In the algorithm, the similarity degrees of first interval captured images, whose image-capturing positions are arranged at a first positional interval, are evaluated; if the similarity degrees of the first interval captured images are lower than or equal to a first predetermined degree, the first interval captured images are selected as the useful images; and if the similarity degrees of the first interval captured images are higher than the first predetermined degree, the captured images, whose image-capturing positions are arranged at a positional interval longer than the first positional interval, are selected as the useful images. Also, in an image recognition system, in which the similarity degrees are assigned to the set of the image feature point data, the following algorithm may be employed. In the algorithm, the similarity degrees of a set of second interval image feature point data, which is generated from the captured images whose image-capturing positions are arranged at a second positional interval, is evaluated; if the similarity degrees of the set of the second interval image feature point data are lower than or equal to a second predetermined degree, the set of the second interval image feature point data is selected as the set of the useful image feature point data; and if the similarity degrees of the set of the second interval image feature point data are higher than the second predetermined degree, a set of the image feature point data, which is generated from the captured images whose image-capturing positions are arranged at a positional interval longer than the second positional interval, is selected as the set of the useful images. Thus, it is possible to easily remove the captured image or the image feature point data that is inappropriate for creating the reference data due to the relatively high similarity degree. Accordingly, it is possible to create the reference data DB 92 that does not include useless reference data. Note that the first positional interval and the second positional interval described above may be the same or different from each other, and the first predetermined degree and the second predetermined degree described above may be the same or different from each other.

(5) In the above-described embodiment, among the edge points obtained as the image feature points through the edge detection processing, particularly, the line segment edge points (the straight line component edge points) that constitute one line segment, and the corner edge point (the intersection edge point) are treated as the useful image feature points. The corner edge point (the intersection edge point) corresponds to the intersection at which the line segments intersect with each other. However, the image feature points used in the invention are not limited to such edge points. The image feature points useful for a scene may be used. For example, the typical edge points that form a geometric shape, such as a circle and a rectangle, may be used (when the geometric shape is a circle, the typical edge points may be three points on the circumference of the circle), or the gravity center of a geometric shape or a point indicating the gravity center of the geometric shape in the image may be used. Also, it is preferable to employ an edge intensity as a factor used for calculating the importance degree. For example, when a line segment is composed of an edge with a high intensity, the starting point and the ending point of the line segment may be treated as the image feature points to which a high importance degree is assigned, as compared to an importance degree assigned to the edge points other than the starting point and the ending point. Also, specific points in a characteristic geometric shape, for example, end points in a symmetrical object may be treated as the image feature points to which a high importance degree is assigned, as compared to an importance degree assigned to the edge points other than the end points.

Further, in addition to the edge points obtained through the edge detection processing, a point at which a hue and/or a chroma greatly change(s) in the captured image may be employed as the image feature point. Similarly, as the image feature point based on color information, the end point of an object with a high color temperature may be treated as the image feature point with a high importance degree.

That is, any image feature points may be used in the embodiment of the invention, as long as the image feature points are useful for the determination as to the degree of similarity between the reference data and the image feature point data (the data for matching) generated based on the actually-captured image (for example, the pattern matching).

(6) In the above-described embodiment, the weight coefficient, which is calculated separately from the importance degree, is assigned to each image feature point in accordance with the importance degree of the image feature point. However, the importance degree may be used as the weight coefficient.

(7) In the above-described embodiment, the reference data stored in the reference data DB 92 is associated with the image-capturing position and the image-capturing direction (the direction of the optical axis of the camera). The reference data may be associated with the above-described image-capturing situation information, a date on which the image is captured, a weather at the time of image capturing, and the like, in addition to the image-capturing position and the image-capturing direction.

The image-capturing position needs to be indicated by at least two-dimensional data such as data including the latitude and the longitude. The image-capturing position may be indicated by three-dimensional data including the latitude, the longitude, and the altitude.

The image-capturing direction does not necessarily need to be associated with the reference data. For example, in the case where it is ensured that when the reference data is created, the image is captured in a direction with respect to a road on which the vehicle is traveling, which is substantially the same as a direction in which the image is captured when the scenic image recognition is performed using the reference data, the image-capturing direction does not need to be associated with the reference data.

In the case where the image-capturing direction is associated with the reference data, and a plurality of reference data may be prepared by appropriately changing the image-capturing direction from one basic image-capturing direction, the direction in which the vehicle is traveling may be calculated based on information transmitted from the direction sensor and the like, and only the reference data, whose image-capturing direction coincides with the direction in which the vehicle is traveling, may be used for the scenic image recognition. Thus, when the image-capturing attribute information includes the image-capturing direction as described above, it is possible to reduce the amount of the reference data used for the matching, by specifying the image-capturing direction.

(8) The most appropriate vehicle-mounted camera used in the embodiment of the invention is a camera that captures an image of a scene ahead of the vehicle in the direction in which the vehicle is traveling. However, the vehicle-mounted camera may be a camera that captures an image of a scene at a position obliquely ahead of the vehicle, or a camera that captures an image of a scene on the side of the vehicle, or an image of a scene behind the vehicle. That is, the captured image used in the embodiment of the invention is not limited to an image of a scene ahead of the vehicle in the direction in which the vehicle is traveling.

(9) In the functional block diagram used to describe the above embodiment, the functional units are separated from each other so that the description is easily understandable. However, the embodiment of the invention is not limited to the case where the functional units are separated from each other as shown in the functional block diagram. At least two of the functional units may be freely combined with each other, and/or one functional unit may be further divided.

The image processing system according to the embodiment of the invention may be applied not only to car navigation, but also to a technical field in which the current position and the current direction are measured through the scenic image recognition.

## Claims

1. An image processing system comprising:
a temporary storage unit (61) that is adapted to temporarily store, as processing target captured images, a plurality of captured images whose image-capturing positions, which are the positions at which the images are captured to obtain the captured images, are included in a predetermined region, among captured images that are sequentially captured images of scenes viewed from a vehicle during travel of the vehicle;
a similarity degree calculation unit (62) that is adapted to calculate similarity degrees of the processing target captured images;
a useful image selection unit (63) that is adapted to select the processing target captured images whose similarity degrees are different from each other, as useful images;
a first feature point extraction unit (52) that is adapted to extract image feature points from each of the useful images;
a first image feature point data generation unit (56) that is adapted to generate image feature point data that includes the image feature points extracted by the first feature point extraction unit (52); and
a reference data database creation unit (57) that is adapted to generate reference data, used when scenic image recognition is performed, by associating the image feature point data generated by the first image feature point data generation unit (56) with the image-capturing position at which the image is captured to obtain the captured image corresponding to the image feature point data, and create a reference data database (92) that is a database of the reference data.

2. The image processing system according to claim 1, wherein
the useful image selection unit (63) is adapted to select the useful images in a manner such that the similarity degrees of the useful images are different from each other and the image-capturing positions of the useful images are different from each other.

3. The image processing system according to claim 2, wherein
the useful image selection unit (63) is adapted to evaluate the similarity degrees of the processing target captured images whose image-capturing positions are arranged at a first positional interval;
when the similarity degrees of the processing target captured images, whose image-capturing positions are arranged at the first positional interval, are lower than a first predetermined degree, the useful image selection unit (63) selects the processing target captured images whose image-capturing positions are arranged at the first positional interval, as the useful images; and
when the similarity degrees of the processing target captured images, whose image-capturing positions are arranged at the first positional interval, are higher than the first predetermined degree, the useful image selection unit (63) selects the processing target captured images whose image-capturing positions are arranged at a positional interval different from the first positional interval, as the useful images.

4. The image processing system according to claim 2, wherein
when the processing target captured images are disposed according to the similarity degrees and the image-capturing positions in a two-dimensional plane, the useful image selection unit (63) selects a predetermined number of the processing target captured images as the useful images in a manner such that dispersion of the predetermined number of the processing target captured images is maximum.

5. The image processing system according to claim 1, wherein
when a plurality of identification target paths are included in the predetermined region, the useful image selection unit (63) selects, as the useful image, at least one of the processing target captured images for each of the plurality of the identification target paths.

6. An image processing system comprising:
a temporary storage unit (61) that is adapted to temporarily store, as processing target captured images, a plurality of captured images whose image-capturing positions, which are the positions at which the images are captured to obtain the captured images, are included in a predetermined region, among captured images that are sequentially captured images of scenes viewed from a vehicle during travel of the vehicle;
a first feature point extraction unit (52) that is adapted to extract image feature points from the processing target captured images;
a first image feature point data generation unit (56) that is adapted to generate image feature point data that includes the image feature points extracted by the second feature point extraction unit;
a similarity degree calculation unit (62) that is adapted to calculate similarity degrees of a set of the image feature point data generated by the first image feature point data generation unit;
a useful image selection unit (63) that is adapted to select a set of the image feature point data whose similarity degrees are different from each other, as a set of useful image feature point data; and
a reference data database creation unit (57) that is adapted to generate reference data, used when scenic image recognition is performed, by associating the useful image feature point data with the image-capturing position at which the image is captured to obtain the captured image corresponding to the useful image feature point data, and create a reference data database (92) that is a database of the reference data.

7. The image processing system according to claim 6, wherein
the useful image selection unit (63) is adapted to select the set of the useful image feature point data in a manner such that the similarity degrees of the set of the useful image feature point data are different from each other and the image-capturing positions of the captured images corresponding to the set of the useful image feature point data are different from each other.

8. The image processing system according to claim 7, wherein
the useful image selection unit (63) is adapted to evaluate the similarity degrees of a set of the image feature point data corresponding to the captured images whose image-capturing positions are arranged at a first positional interval;
when the similarity degrees of the set of the image feature point data, corresponding to the captured images whose image-capturing positions are arranged at the first positional interval, are lower than a first predetermined degree, the useful image selection unit (63) selects the set of the image feature point data corresponding to the captured images whose image-capturing positions are arranged at the first positional interval, as the set of the useful image feature point data; and
when the similarity degrees of the set of the image feature point data, corresponding to the captured images whose image-capturing positions are arranged at the first positional interval, are higher than the first predetermined degree, the useful image selection unit (63) selects a set of the image feature point data corresponding to captured images whose image-capturing positions are arranged at a positional interval different from the first positional interval, as the set of the useful image feature point data.

9. The image processing system according to claims 7 or 8, wherein
when a set of image feature point data are disposed according to the similarity degrees and the image-capturing positions in a two-dimensional plane, the useful image selection unit (63) selects a predetermined number of the image feature point data as the useful image feature point data in a manner such that dispersion of the predetermined number of the image feature point data is maximum.

10. The image processing system according to any one of claims 6 to 9, wherein
when a plurality of identification target paths are included in the predetermined region, the useful image selection unit (63) selects, as the useful image, at least one of the processing target captured images for each of the plurality of the identification target paths.

11. The image processing system according to claims 5 or 10, wherein
the plurality of the identification target paths are a plurality of branch paths extending from at least one branch point.

12. The image processing system according to any one of claims 5, 10 and 11, wherein, in a situation where the vehicle travels in an area in which there are a plurality of levels,
at least one of the identification target paths is set at each of the plurality of levels.

13. The image processing system according to any one of claims 1 to 12, wherein
the predetermined region corresponds to an error range determined based on an error that occurs when a position of the vehicle is estimated.

14. The image processing system according to claims 1 or 6, wherein
the predetermined region corresponds to a predetermined distance traveled by the vehicle.

15. The image processing system according to any one of claims 1 to 14, further comprising:
a feature point importance degree determination unit (53) that is adapted to determine importance degrees of the image feature points, wherein
the first image feature point data generation unit (56) is adapted to generate the image feature point data for each of the captured images, using the image feature points, based on the importance degrees.

16. The image processing system according to claim 15, wherein
the image feature points extracted by the first feature point extraction unit (52) are edge points obtained through edge detection processing performed on the captured images; and
when the edge points are straight line component edge points that form a straight line, the feature point importance degree determination unit (53) assigns a high importance degree to the straight line component edge points, as compared to an importance degree assigned to the edge points other than the straight line component edge points.

17. The image processing system according to claim 16, wherein
the feature point importance degree determination unit (53) is adapted to assign a high importance degree to an intersection edge point among the straight line component edge points, as compared to an importance degree assigned to the straight line component edge points other than the intersection edge point, and the intersection edge point is an intersection of two straight line components.

18. A position measurement system comprising:
the reference data database (92) created by the image processing system according to claim 1 or 6;
a data input unit (51) adapted to receive a captured image, which is an image of a scene viewed from a vehicle captured during travel of the vehicle, as input;
a second feature point extraction unit (52) that is adapted to extract image feature points from the captured image input to the data input unit (51);
a second image feature point data generation unit (56) that is adapted to generate image feature point data for each captured image using the image feature points extracted by the second feature point extraction unit (52), and output the image feature point data as data for matching; and
a scene matching unit (6) that is adapted to perform matching between the reference data extracted from the reference data database (92) and the data for matching, and determine a vehicle position based on an image-capturing position associated with the reference data that matches the data for matching.

## Patentansprüche

1. Bildverarbeitungssystem mit:
einer Temporärspeichereinheit (61), die zum temporären Speichern einer Mehrzahl von erfassten Bildern, deren Bilderfassungspositionen, die die Positionen sind, an denen die Bilder zum Erhalten der erfassten Bilder erfasst werden, in einem vorbestimmten Bereich enthalten sind, von erfassten Bildern, die der Reihe nach erfasste Bilder von Szenen sind, die von einem Fahrzeug aus während einer Fortbewegung des Fahrzeugs betrachtet werden, als Verarbeitungszielerfassungsbilder angepasst ist;
einer Ähnlichkeitsgradberechnungseinheit (62), die zum Berechnen von Ähnlichkeitsgraden der Verarbeitungszielerfassungsbilder angepasst ist;
einer Nutzbildauswahleinheit (63), die zum Auswählen der Verarbeitungszielerfassungsbilder, deren Ähnlichkeitsgrade sich voneinander unterscheiden, als Nutzbilder angepasst ist;
einer ersten Merkmalspunktextrahiereinheit (52), die zum Extrahieren von Bildmerkmalspunkten aus jedem der Nutzbilder angepasst ist;
einer ersten Bildmerkmalspunktdatenerzeugungseinheit (56), die zum Erzeugen von Bildmerkmalspunktdaten, die die von der ersten Merkmalspunktextrahiereinheit (52) extrahierten Bildmerkmalspunkte enthalten, angepasst ist; und
einer Bezugsdatendatenbankerzeugungseinheit (57), die zum Erzeugen von Bezugsdaten, die beim Durchführen einer szenischen Bilderkennung verwendet werden, durch Assoziieren der Bildmerkmalspunktdaten, die von der ersten Bildmerkmalspunktdatenerzeugungseinheit (56) erzeugt werden, mit der Bilderfassungsposition, an der das Bild zum Erhalten des erfassten Bilds erfasst wird, das den Bildmerkmalspunktdaten entspricht, und Erzeugen einer Bezugsdatendatenbank (92), die eine Datenbank der Bezugsdaten ist, angepasst ist.

2. Bildverarbeitungssystem nach Anspruch 1, bei dem
die Nutzbildauswahleinheit (63) zum Auswählen der Nutzbilder auf eine Weise, dass sich die Ähnlichkeitsgrade der Nutzbilder voneinander unterscheiden und sich die Bilderfassungspositionen der Nutzbilder voneinander unterscheiden, angepasst ist.

3. Bildverarbeitungssystem nach Anspruch 2, bei dem
die Nutzbildauswahleinheit (63) zum Auswerten der Ähnlichkeitsgrade der Verarbeitungszielerfassungsbilder, deren Bilderfassungspositionen bei einem ersten Positionsintervall angeordnet sind, angepasst ist;
wenn die Ähnlichkeitsgrade der Verarbeitungszielerfassungsbilder, deren Bilderfassungspositionen bei dem ersten Positionsintervall angeordnet sind, niedriger als ein erster vorbestimmter Grad sind, die Nutzbildauswahleinheit (63) die Verarbeitungszielerfassungsbilder, deren Bilderfassungspositionen bei dem ersten Positionsintervall angeordnet sind, als die Nutzbilder auswählt; und
wenn die Ähnlichkeitsgrade der Verarbeitungszielerfassungsbilder, deren Bilderfassungspositionen bei dem ersten Positionsintervall angeordnet sind, höher als der erste vorbestimmte Grad sind, die Nutzbildauswahleinheit (63) die Verarbeitungszielerfassungsbilder, deren Bilderfassungspositionen bei einem Positionsintervall angeordnet sind, das sich von dem ersten Positionsintervall unterscheidet, als die Nutzbilder auswählt.

4. Bildverarbeitungssystem nach Anspruch 2, bei dem
wenn die Verarbeitungszielerfassungsbilder gemäß den Ähnlichkeitsgraden und den Bilderfassungspositionen in einer zweidimensionalen Ebene angeordnet sind, die Nutzbildauswahleinheit (63) eine vorbestimmte Anzahl der Verarbeitungszielerfassungsbilder auf eine Weise, dass die Dispersion der vorbestimmten Anzahl der Verarbeitungszielerfassungsbilder maximal ist, als die Nutzbilder auswählt.

5. Bildverarbeitungssystem nach Anspruch 1, bei dem
wenn eine Mehrzahl von Identifizierungszielpfaden in dem vorbestimmten Bereich enthalten ist, die Nutzbildauswahleinheit (63) mindestens eines der Verarbeitungszielerfassungsbilder für jeden der Mehrzahl der Identifizierungszielpfade als das Nutzbild auswählt.

6. Bildverarbeitungssystem mit:
einer Temporärspeichereinheit (61), die zum temporären Speichern einer Mehrzahl von erfassten Bildern, deren Bilderfassungspositionen, die die Positionen sind, an denen die Bilder zum Erhalten der erfassten Bilder erfasst werden, in einem vorbestimmten Bereich enthalten sind, von erfassten Bildern, die der Reihe nach erfasste Bilder von Szenen sind, die von einem Fahrzeug aus während einer Fortbewegung des Fahrzeugs betrachtet werden, als Verarbeitungszielerfassungsbilder angepasst ist;
einer ersten Merkmalspunktextrahiereinheit (52), die zum Extrahieren von Bildmerkmalspunkten aus den Verarbeitungszielerfassungsbildern angepasst ist;
einer ersten Bildmerkmalspunktdatenerzeugungseinheit (56), die zum Erzeugen von Bildmerkmalspunktdaten, die die von der zweiten Merkmalspunktextrahiereinheit extrahierten Bildmerkmalspunkte enthalten, angepasst ist;
einer Ähnlichkeitsgradberechnungseinheit (62), die zum Berechnen von Ähnlichkeitsgraden eines Satzes der Bildmerkmalspunktdaten, die von der ersten Bildmerkmalspunktdatenerzeugungseinheit erzeugt werden, angepasst ist;
einer Nutzbildauswahleinheit (63), die zum Auswählen eines Satzes der Bildmerkmalspunktdaten, deren Ähnlichkeitsgrade sich voneinander unterscheiden, als einen Satz von Nutzbildmerkmalspunktdaten angepasst ist; und
einer Bezugsdatendatenbankerzeugungseinheit (57), die zum Erzeugen von Bezugsdaten, die beim Durchführen einer szenischen Bilderkennung verwendet werden, durch Assoziieren der Nutzbildmerkmalspunktdaten mit der Bilderfassungsposition, an der das Bild zum Erhalten des erfassten Bildes, das den Nutzbildmerkmalspunktdaten entspricht, erfasst wird, und Erzeugen einer Bezugsdatendatenbank (92), die eine Datenbank der Bezugsdaten ist, angepasst ist.

7. Bildverarbeitungssystem nach Anspruch 6, bei dem
die Nutzbildauswahleinheit (63) zum Auswählen des Satzes der Nutzbildmerkmalspunktdaten auf eine Weise, dass sich die Ähnlichkeitsgrade des Satzes der Nutzbildmerkmalspunktdaten voneinander unterscheiden und sich die Bilderfassungspositionen der erfassten Bilder, die dem Satz der Nutzbildmerkmalspunktdaten entsprechen, voneinander unterscheiden, angepasst ist.

8. Bildverarbeitungssystem nach Anspruch 7, bei dem
die Nutzbildauswahleinheit (63) zum Auswerten der Ähnlichkeitsgrade eines Satzes der Bildmerkmalspunktdaten, die den erfassten Bildern entsprechen, deren Bilderfassungspositionen bei einem ersten Positionsintervall angeordnet sind, angepasst ist;
wenn die Ähnlichkeitsgrade des Satzes der Bildmerkmalspunktdaten, die den erfassten Bildern entsprechen, deren Bilderfassungspositionen bei dem ersten Positionsintervall angeordnet sind, niedriger als ein erster vorbestimmter Grad sind, die Nutzbildauswahleinheit (63) den Satz der Bildmerkmalspunktdaten, die den erfassten Bildern entsprechen, deren Bilderfassungspositionen bei dem ersten Positionsintervall angeordnet sind, als den Satz der Nutzbildmerkmalspunktdaten auswählt; und
wenn die Ähnlichkeitsgrade des Satzes der Bildmerkmalspunktdaten, die den erfassten Bildern entsprechen, deren Bilderfassungspositionen bei dem ersten Positionsintervall angeordnet sind, höher als der erste vorbestimmte Grad sind, die Nutzbildauswahleinheit (63) einen Satz der Bildmerkmalspunktdaten, die erfassten Bildern entsprechen, deren Bilderfassungspositionen bei einem Positionsintervall angeordnet sind, das sich von dem ersten Positionsintervall unterscheidet, als den Satz der Nutzbildmerkmalspunktdaten auswählt.

9. Bilderfassungssystem nach Anspruch 7 oder 8, bei dem
wenn ein Satz von Bildmerkmalspunktdaten gemäß den Ähnlichkeitsgraden und den Bilderfassungspositionen in einer zweidimensionalen Ebene angeordnet ist, die Nutzbildauswahleinheit (63) eine vorbestimmte Anzahl der Bildmerkmalspunktdaten auf eine Weise, dass die Dispersion der vorbestimmten Anzahl der Bildmerkmalspunktdaten maximal ist, als die Nutzbildmerkmalspunktdaten auswählt.

10. Bildverarbeitungssystem nach einem der Ansprüche 6 bis 9, bei dem
wenn eine Mehrzahl von Identifizierungszielpfaden in dem vorbestimmten Bereich enthalten ist, die Nutzbildauswahleinheit (63) mindestens eines der Verarbeitungszielerfassungsbilder für jeden der Mehrzahl der Identifizierungszielpfade als das Nutzbild auswählt.

11. Bildverarbeitungssystem nach Anspruch 5 oder 10, bei dem
die Mehrzahl der Identifizierungszielpfade eine Mehrzahl von sich von mindestens einem Verzweigungspunkt erstreckenden Verzweigungspfaden ist.

12. Bildverarbeitungssystem nach einem der Ansprüche 5, 10 und 11, bei dem in einer Situation, in der sich das Fahrzeug in einem Gebiet fortbewegt, in dem mehrere Ebenen vorhanden sind,
mindestens einer der Identifizierungszielpfade in jeder der mehreren Ebenen eingestellt wird.

13. Bildverarbeitungssystem nach einem der Ansprüche 1 bis 12, bei dem
der vorbestimmte Bereich einem Fehlerbereich entspricht, der basierend auf einem Fehler, der auftritt, wenn eine Position des Fahrzeugs ermittelt wird, bestimmt wird.

14. Bildverarbeitungssystem nach Anspruch 1 oder 6, bei dem
der vorbestimmte Bereich einer vorbestimmten Entfernung, die von dem Fahrzeug zurückgelegt wird, entspricht.

15. Bildverarbeitungssystem nach einem der Ansprüche 1 bis 14, ferner mit:
einer Merkmalspunktbedeutungsgradbestimmungseinheit (53), die zum Bestimmen von Bedeutungsgraden der Bildmerkmalspunkte angepasst ist, wobei
die erste Bildmerkmalspunktdatenerzeugungseinheit (56) zum Erzeugen der Bildmerkmalspunktdaten für jedes der erfassten Bilder unter Verwendung der Bildmerkmalspunkte basierend auf den Bedeutungsgraden angepasst ist.

16. Bildverarbeitungssystem nach Anspruch 15, bei dem
die Bildmerkmalspunkte, die von der ersten Merkmalspunktextraktionseinheit (52) extrahiert werden, Kantenpunkte sind, die durch eine Kantendetektionsverarbeitung, die an den erfassten Bildern durchgeführt wird, erhalten werden; und
wenn die Kantenpunkte Linienkomponentenkantenpunkte sind, die eine gerade Linie bilden, die Merkmalspunktbedeutungsgradbestimmungseinheit (53) den Linienkomponentenkantenpunkten im Vergleich zu einem Bedeutungsgrad, der den Kantenpunkten, die sich von den Linienkomponentenkantenpunkten unterscheiden, zugewiesen wird, einen hohen Bedeutungsgrad zuweist.

17. Bildverarbeitungssystem nach Anspruch 16, bei dem
die Merkmalspunktbedeutungsgradbestimmungseinheit (53) zum Zuweisen eines hohen Bedeutungsgrads zu einem Schnittkantenpunkt der Linienkomponentenkantenpunkte im Vergleich zu einem Bedeutungsgrad, der den Linienkomponentenkantenpunkten, die sich von dem Schnittkantenpunkt unterscheiden, zugewiesen wird, angepasst ist und der Schnittkantenpunkt ein Schnittpunkt von zwei Linienkomponenten ist.

18. Positionsmesssystem mit:
der Bezugsdatendatenbank (92), die von dem Bildverarbeitungssystem nach Anspruch 1 oder 6 erzeugt wird;
einer Dateneingabeeinheit (51), die zum Empfangen eines erfassten Bildes, das ein Bild einer von einem Fahrzeug aus betrachteten Szene ist, das während einer Fortbewegung des Fahrzeugs erfasst wird, als eine Eingabe angepasst ist;
einer zweiten Merkmalspunktextraktionseinheit (52), die zum Extrahieren von Bildmerkmalspunkten aus dem erfassten Bild, das in die Dateneingabeeinheit (51) eingegeben wird, angepasst ist;
einer zweiten Bildmerkmalspunktdatenerzeugungseinheit (56), die zum Erzeugen von Bildmerkmalspunktdaten für jedes erfasste Bild unter Verwendung der Bildmerkmalspunkte, die von der zweiten Merkmalspunktextraktionseinheit (52) extrahiert werden, und Ausgeben der Bildmerkmalspunktdaten als Daten für einen Abgleich angepasst ist; und
einer Szenenabgleicheinheit (6), die zum Durchführen eines Abgleichs zwischen den Bezugsdaten, die aus der Bezugsdatendatenbank (92) extrahiert werden, und den Daten für einen Abgleich und Bestimmen einer Fahrzeugposition basierend auf einer Bilderfassungsposition, die den Bezugsdaten zugeordnet ist, die mit den Daten für einen Abgleich übereinstimmen, angepasst ist.

## Revendications

1. Un système de traitement des images comprenant :
une unité de stockage temporaire (61) qui est conçue pour stocker temporairement, sous forme d'images capturées par traitement de cibles, une pluralité d'images capturées dont les positions de capture de l'image, qui sont les positions au niveau desquelles les images sont capturées afin d'obtenir les images capturées, sont comprises dans une région prédéterminée, parmi des images capturées qui sont des images capturées de façon séquencée de scènes vues depuis un véhicule alors que ce véhicule est en déplacement ;
une unité de calcul du degré de similitude (62) qui est conçue pour calculer les degrés de similitude des images capturées par traitement de cibles ;
une unité de sélection des images utiles (63) qui est conçue pour sélectionner les images capturées par traitement de cibles dont les degrés de similitude sont différents les uns des autres, en tant qu'images utiles ;
une première unité d'extraction des points caractéristiques (52) qui est conçue pour extraire les points caractéristiques de l'image à partir de chacune des images utiles ;
une première unité de génération de données des points caractéristiques de l'image (56) qui est conçue pour générer les données des points caractéristiques de l'image qui comprend les points caractéristiques de l'image extraits par la première unité d'extraction des points caractéristiques (52) ; et
une unité de création d'une base de données comprenant des données de référence (57) qui est conçue pour générer les données de référence,
employées lorsque la reconnaissance de l'image de la scène est réalisée, en associant les données des points caractéristiques de l'image générées par la première unité de génération de données des points caractéristiques de l'image (56) avec la position de capture de l'image au niveau de laquelle l'image est capturée afin d'obtenir l'image capturée correspondant aux données des points caractéristiques de l'image, et de créer une base de données comprenant des données de référence (92) qui est une base de données des données de référence.

2. Le système de traitement des images selon la revendication 1, dans lequel
l'unité de sélection des images utiles (63) est conçue pour sélectionner les images utiles de sorte que les degrés de similitude des images utiles sont différents les uns des autres et que les positions de capture de l'image des images utiles sont différentes les unes des autres.

3. Le système de traitement des images selon la revendication 2, dans lequel
l'unité de sélection des images utiles (63) est conçue pour évaluer les degrés de similitude des images capturées par traitement de cibles dont les positions de capture de l'image sont disposées au niveau d'un premier intervalle positionnel ;
lorsque les degrés de similitude des images capturées par traitement de cibles, dont les positions de capture de l'image se trouvent au niveau du premier intervalle positionnel, sont inférieurs à un premier degré prédéterminé, l'unité de sélection des images utiles (63) sélectionne les images capturées par traitement de cibles dont les positions de capture de l'image sont disposées au niveau d'un premier intervalle positionnel, comme les images utiles ;
et
lorsque les degrés de similitude des images capturées par traitement de cibles, dont les positions de capture de l'image se trouvent au niveau du premier intervalle positionnel, sont supérieurs au premier degré prédéterminé, l'unité de sélection des images utiles (63) sélectionne les images capturées par traitement de cibles dont les positions de capture de l'image se trouvent au niveau d'un intervalle positionnel différent du premier intervalle positionnel, comme les images utiles.

4. Le système de traitement des images selon la revendication 2, dans lequel
lorsque les images capturées par traitement de cibles sont disposées selon les degrés de similitude et les positions de capture de l'image dans un plan bidimensionnel, l'unité de sélection des images utiles (63) sélectionne un nombre prédéterminé d'images capturées par traitement de cibles sous forme d'images utiles de façon à ce que la dispersion du nombre prédéterminé d'images capturées par traitement de cibles est maximal.

5. Le système de traitement des images selon la revendication 1, dans lequel
lorsqu'une pluralité de voies d'identification est comprise dans la région prédéterminée, l'unité de sélection des images utiles (63) sélectionne, en tant qu'image utile, au moins une des images capturées par traitement de cibles pour chacune des voies de la pluralité de voies d'identification.

6. Un système de traitement des images comprenant :
une unité de stockage temporaire (61) qui est conçue pour stocker temporairement, sous forme d'images capturées par traitement de cibles, une pluralité d'images capturées dont les positions de capture de l'image, qui sont les positions au niveau desquelles les images sont capturées de façon à obtenir les images capturées, sont comprises dans une région prédéterminée, parmi les images capturées qui sont des images capturées de façon séquencée de scènes vues depuis un véhicule alors que ce véhicule est en déplacement ;
une première unité d'extraction des points caractéristiques (52) qui est conçue pour extraire les points caractéristiques de chacune des images capturées par traitement de cibles ;
une première unité de génération de données des points caractéristiques de l'image (56) qui est conçue pour générer les données des points caractéristiques de l'image qui comprend les points caractéristiques de l'image extraits par la seconde unité d'extraction des points caractéristiques ;
une unité de calcul du degré de similitude (62) qui est conçue pour calculer les degrés de similitude d'un ensemble de données de points caractéristiques de l'image par la première unité de génération de données des points caractéristiques de l'image ;
une unité de sélection des images utiles (63) qui est conçue pour sélectionner un ensemble de données de points caractéristiques de l'image dont les degrés de similitude sont différents les uns des autres, sous forme d'un ensemble de données de points caractéristiques de l'image utile ; et
une unité de création d'une base de données comportant des données de référence (57) qui est conçue pour générer les données de référence,
employées lorsque la reconnaissance de l'image de la scène est réalisée, en associant les données des points caractéristiques de l'image utile avec la position de capture de l'image au niveau de laquelle l'image est capturée afin d'obtenir l'image capturée correspondant aux données des points caractéristiques de l'image utile, et de
créer une base de données comportant des données de référence (92) qui est une base de données des données de référence.

7. Le système de traitement des images selon la revendication 6, dans lequel
l'unité de sélection des images utiles (63) est conçue pour sélectionner l'ensemble des données des points caractéristiques de l'image utile de façon à ce que les degrés de similitude de l'ensemble des données des points caractéristiques de l'image utile sont différents les uns des autres et que les positions de capture de l'image des images capturées correspondant à l'ensemble des données des points caractéristiques de l'image utile sont différentes les unes des autres.

8. Le système de traitement des images selon la revendication 7, dans lequel
l'unité de sélection des images utiles (63) est conçue pour évaluer les degrés de similitude d'un ensemble de données des points caractéristiques de l'image correspondant aux images capturées dont les positions de capture de l'image se trouvent au niveau d'un premier intervalle positionnel ; lorsque les degrés de similitude de l'ensemble des données des points caractéristiques de l'image, correspondant aux images capturées dont les positions de capture de l'image sont disposées au niveau du premier intervalle positionnel, sont inférieures à un premier degré prédéterminé, l'unité de sélection des images utiles (63) sélectionne l'ensemble des données des points caractéristiques de l'image correspondant aux images capturées dont les positions de capture de l'image se trouvent au niveau du premier intervalle positionnel, sous forme de l'ensemble de données des point caractéristiques de l'image utile ; et
lorsque les degrés de similitude de l'ensemble de données des points caractéristiques de l'image, correspondant aux images capturées dont les positions de capture de l'image sont disposées au niveau du premier intervalle positionnel, sont supérieurs au premier degré prédéterminé, l'unité de sélection des images utiles (63) sélectionne un ensemble de données des points caractéristiques de l'image correspondant aux images capturées dont les positions de capture de l'image se trouvent au niveau d'un intervalle positionnel différent du premier intervalle positionnel, comme l'ensemble de données des points caractéristiques de l'image utile.

9. Le système de traitement des images selon les revendications 7 ou 8, dans lequel lorsqu'un ensemble de données des points caractéristiques de l'image sont disposés conformément aux degrés de similitude et aux positions de capture de l'image dans un plan bidimensionnel, l'unité de sélection des images utiles (63) sélectionne un nombre prédéterminé de données des points caractéristiques de l'image sous forme de données des points caractéristiques de l'image utile de façon à ce que la dispersion du nombre prédéterminé des données des points caractéristiques de l'image est maximal.

10. Le système de traitement des images selon l'une quelconque des revendications 6 à 9, dans lequel
lorsqu'une pluralité des voies d'identification est comprise dans la région prédéterminée, l'unité de sélection des images utiles (63) sélectionne, en tant qu'image utile, au moins une des images capturées par traitement des cibles pour chacune des voies d'identification de la pluralité de voies d'identification.

11. Le système de traitement des images selon les revendications 5 ou 10, dans lequel la pluralité des voies d'identification est une pluralité de voies de répartition s'étendant depuis au moins un point de répartition.

12. Le système de traitement des images selon l'une quelconque des revendications 5, 10 et 11, dans lequel, dans une situation au cours de laquelle le véhicule se déplace dans une zone où se trouve une pluralité de niveaux,
au moins une des voies d'identification est fixée à chacun des niveaux de la pluralité de niveaux.

13. Le système de traitement des images selon l'une quelconque des revendications 1 à 12, dans
lequel
la région prédéterminée correspond à une gamme d'erreurs déterminée sur base d'une erreur qui se produit lorsqu'une position du véhicule est estimée.

14. Le système de traitement des images selon les revendications 1 ou 6, dans lequel la région prédéterminée correspond à une distance prédéterminée effectuée par le véhicule.

15. Le système de traitement des images selon l'une quelconque des revendications 1 à 14, comprenant également :
une unité de détermination du degré d'importance des points caractéristiques (53) qui est conçue pour déterminer les degrés d'importance des points caractéristiques de l'image, dans lequel la première unité de génération de données des points caractéristiques de l'image (56) est conçue pour générer les données des points caractéristiques de l'image pour chacune des images capturées, à l'aide des points caractéristiques de l'image, sur base des degrés d'importance.

16. Le système de traitement des images selon la revendication 15, dans lequel
les points caractéristiques de l'image extraits par la première unité d'extraction des points caractéristiques (52) sont des pixels de contour obtenus à l'aide d'un processus de détection des pixels réalisé sur les images capturées ; et lorsque les pixels de contour sont des pixels de contour qui sont les composants d'une ligne droite qui forment une ligne droite, l'unité de détermination du degré d'importance des points caractéristiques (53) assigne un degré d'importance élevé aux pixels de contour composant la ligne droite, comparativement à un degré d'importance assigné aux pixels de contour autres que les pixels de contour composant la ligne droite.

17. Le système de traitement des images selon la revendication 16, dans lequel
l'unité de détermination du degré d'importance des points caractéristiques (53) est conçue pour assigner un degré d'importance élevé au pixel de contour d'intersection parmi les pixels de contour composant la ligne droite, comparativement à un degré d'importance assigné aux pixels de contour composant la ligne droite autres que le pixel de contour d'intersection, et le pixel de contour d'intersection est une intersection des deux composants de la ligne droite.

18. Un système de mesure de la position comprenant :
la base de données comportant des données de référence (92) créée par le système de traitement des images selon la revendication 1 ou 6 ;
une unité d'entrée des données (51) conçue pour recevoir une image capturée, qui est une image d'une scène vue depuis un véhicule et qui est capturée durant le déplacement du véhicule, en tant qu'entrée ;
une seconde unité d'extraction des points caractéristiques (52) qui est conçue pour extraire les points caractéristiques de l'image depuis l'entrée d'images capturées au niveau de l'unité d'entrée des données (51) ;
une seconde unité de génération des données des points caractéristiques de l'image (56) qui est conçue pour générer les données des points caractéristiques de l'image pour chaque image capturée à l'aide des points caractéristiques de l'image extraits par la seconde unité d'extraction des points caractéristiques (52), et la sortie des données des points caractéristiques de l'image sous forme de données à apparier ; et
une unité appariant la scène (6) qui est conçue pour procéder à l'appariement entre les données de référence extraites depuis la base de données comportant des données de référence (92) et les données à apparier, et à déterminer une position d'un véhicule sur base d'une position de capture de l'image associée aux données de référence qui apparient les données à apparier.
